# EUROPÄISCHE PATENTSCHRIFT

(11) **EP 0 913 612 B1**
(45) Veröffentlichungstag und Bekanntmachung des Hinweises auf die Patenterteilung: **02.04.2003**
(21) Anmeldenummer: 98112355.7
(22) Anmeldetag: 03.07.1998
(51) Int. Cl.: F16L 13/14, B21D 39/04

(54) **Verfahren zum Verbinden eines Rohres mit einer Rohrkupplung, Verbindung zwischen einem Rohr und einer Rohrkupplung sowie Rohrkupplung hierfür**
Procedure for connecting a pipe with a pipe coupling, a coupling between a pipe and a pipe coupling and a pipe coupling therefor
Procédé de connexion d'un tuyau avec un raccord de tuyau, une connexion entre un tuyau et un raccord de tuyau ainsi qu'un raccord de tuyau pour ceci

(30) Priorität: 03.11.1997 EP 97119127
(43) Veröffentlichungstag der Anmeldung: 06.05.1999
(73) Patentinhaber: NOVOPRESS GMBH PRESSEN UND PRESSWERKZEUGE & CO. KG., 41460 Neuss (DE)
(72) Erfinder:
(74) Vertreter: Paul, Dieter-Alfred, Dipl.-Ing.

(56) Entgegenhaltungen:
- EP-A- 0 546 405
- EP-A- 0 774 611
- WO-A-92/09840
- WO-A-94/24475
- DE-A- 4 243 625
- US-A- 4 598 938
- US-A- 5 470 113

## Beschreibung

Die Erfindung betrifft ein Verfahren zum Verbinden eines Rohres im Bereich seines Rohrendes mit einer Rohrkupplung, die wenigstens eine Stützhülse mit einer Eingriffseinrichtung aufweist, wobei zunächst Rohr und Stützhülse ineinandergeschoben und dann das Rohr unter Bildung einer Formschlußverbindung mit der Eingriffseinrichtung und unter Bildung einer Abdichtung mit in Axialrichtung aneinanderliegenden Dichtflächen verpreßt wird. Die Erfindung bezieht sich desweiteren auf eine Verbindung, hergestellt nach dem vorstehenden Verfahren, sowie auf eine hierfür geeignete Rohrkupplung.

Zur Verbindung der Rohrenden von zwei Rohren oder - bei Verzweigungen - von mehr als zwei Rohren, sind Rohrkupplungen bekannt. Die Rohrkupplungen sind so ausgebildet, daß sie durch Ineinanderschieben mit den Rohren zur Überlappung mit diesen gebracht werden können. Im Überlappungsbereich werden beide Teile radial verpreßt, und es wird hierdurch eine flüssigkeitsdichte Verbindung zwischen der Rohrkupplung und den Rohren hergestellt.

Je nach Material der Rohre kommen im Stand der Technik unterschiedliche Rohrkupplungen zum Einsatz. Bei Metallrohren werden hülsenförmige Preßfittings verwendet, die endseitig radial nach außen vorstehende Ringwülste aufweisen, in die innenseitig Dichtungsringe eingelegt sind. In die Preßfittings werden von beiden Seiten Rohre eingeschoben. Dann werden die Ringwülste radial nach innen unter plastischer Verformung sowohl des Preßfittings als auch des Rohrs verpreßt, und zwar mit Hilfe eines dafür geeigneten Preßgerätes. Eine solche Verbindung ist beispielhaft der EP-A-0 198 789 zu entnehmen.

Mit der Verwendung von Dichtungsringen sind eine Reihe von Nachteilen verbunden. Zum einen ist nicht sichergestellt, daß der Dichtungsring beim Einschieben des Rohres in das Preßfitting unbeschädigt bleibt, denn sein Durchmesser ist kleiner als der Rohraußendurchmesser. Zum anderen ist die chemische und thermische Langzeitstabilität solcher Dichtungsringe nicht ausreichend gewährleistet. Da solche Rohrverbindungen insbesondere im Sanitär- und Heizungsbereich zur Anwendung kommen und dort eine Lebensdauer von 50 Jahren angesetzt wird, werden hohe Anforderungen an die Langzeitstabilität des für den Dichtungsring verwendeten Elastomers gestellt. Bei beheizten und insbesondere bei chemisch agressiven Fluiden muß der Werkstoff des Dichtungsrings chemisch und thermisch beständig sein, und er darf seine Dichtwirkung auch bei häufig wechselnden Temperaturen nicht einbüßen.

Zur Vermeidung von Dichtungsringen ist in dem DE-U-94 19 106.9 eine Rohrverbindung vorgeschlagen, bei der das Preßfitting mit einer elastischen Kunststoff- oder Gummibeschichtung versehen ist. Zur Herstellung der Verbindung wird das Rohr - es kann ein Metall- oder Verbundrohr sein - aufgeweitet und über das Preßfitting geschoben. Anschließend werden in die Außenseite des Rohrs eine oder mehrere ringförmige Sicken eingepreßt, so daß das Rohrmaterial in die elastische Beschichtung des Preßfittings eindringt. Eine solche Verbindung hat jedoch nur begrenzte Haltbarkeit und ist vor allem nicht für Kunststoffrohre geeignet.

Für die Verbindung von Kunststoffrohren, beispielsweise aus vernetztem Polyethylen oder Polypropylen, sowie von Verbundrohren, welche von innen nach außen eine Kunststoffschicht, ein Metallrohr oder eine Metallschicht und - als Schutzabdeckung - wiederum eine Kunststoffschicht aufweisen, werden zwei- oder dreiteilige Rohrkupplungen vorgeschlagen (EP-A-0 582 543, WO 92/09840; DE-A-44 41 373; DE-C-196 37 608; JP-A-08 326 974). Bei diesen Rohrkupplungen ist ein Innenteil vorhanden, von dessen Mittelteil sich eine oder mehrere Stützhülsen erstrecken, auf die jeweils ein Rohr aufgeschoben werden kann. Auf die Außenseite der Rohre wird eine einzige, zwei Stützhülsen übergreifende Preßhülse (EP-A-0 582 543), oder es werden jeweils separate Preßhülsen (WO 92/09840; DE-A-44 41 373; DE-C-196 37 608; JP-A-08 326 974) auf die Rohre aufgeschoben und dann radial nach innen verpreßt, so daß die Endbereiche der Rohre zwischen der Preßhülse bzw. den Preßhülsen und den Stützhülsen jeweils über eine längere Strecke eingeklemmt werden. Um die Klemmwirkung zu verbessern, werden zumindest in den Stützhülsen - teilweise auch in den Preßhülsen - Nuten eingeformt, in die das Kunststoffmaterial der Rohre eingepreßt wird, so daß sich ein wellenförmiger Verlauf der Rohre im Klemmbereich unter Ausbildung von in Axialrichtung aneinanderliegenden Dichtflächen ergibt. In der DE-A-196 37 608 sind besondere Ausführungen von Ringnuten in der Stützhülse vorgeschlagen, in die das Kunststoffmaterial eingepreßt wird, um dann innerhalb dieser Nuten eine Abdichtung zu bewirken.

Solche Rohrkupplungen können ohne zusätzliche Dichtungsringe auskommen, so daß bei ihnen die oben beschriebenen Probleme nicht auftreten. Dafür ist ihre Herstellung aufwendiger, da sie konstruktionsbedingt mehrteilig sind und für die Einformung der Nuten zusätzliche Bearbeitungsvorgänge erfordern.

Ein erheblicher Nachteil liegt zudem in dem thermischen Verhalten von reinen Kunststoff- oder auch von Verbundrohren begründet. Er wirkt sich insbesondere bei solchen Rohrleitungen aus, die - wie Heizungs- oder Warmwasserrohre - erheblichen Temperaturschwankungen ausgesetzt sind. Bei Erwärmung dehnt sich der Kunststoff mehr aus als das Metall der Rohrkupplung mit der Folge, daß in den eingeklemmten Rohrbereichen sehr hohe Spannungen entstehen, die sie zum plastischen Fließen bringen, und zwar insbesondere dann, wenn die eingeklemmten Rohrbereiche den Raum zwischen Preß- und Stützhülse vollständig ausfüllen. Der Kunststoff fließt dann förmlich aus diesen Rohrbereichen und damit aus der Rohrkupplung heraus. Bei anschließender Abkühlung schrumpft der Kunststoff wieder, besitzt jedoch wegen der Überschreitung der Fließgrenze nicht mehr die ursprünglichen Abmessungen. Der anfängliche Klemmdruck zwischen Rohr sowie Preß- und Stützhülse wird nicht mehr erreicht. Soweit eine Relativbewegung zwischen Rohr und Stützhülse stattgefunden hat, kommt es auch zur Zerstörung des Kunststoffs entlang der nutenförmigen Dichtstellen.

Noch schwerwiegender ist der Umstand, daß der Kunststoff bei den Dehn- und Schrumpfvorgängen wie eine Art Pumpe wirken kann. Falls in den Spalt zwischen den Grenzoberflächen von Kunststoff und Stützhülse ein Flüssigkeitsfilm entstanden ist, wird bei einer Aufheizung und damit Dehnung des Rohrs an undefinierten Stellen Flüssigkeit eingeschlossen. Dies führt wiederum zu einer Dehnungszunahme, denn das Volumen der eingeschlossenen Flüssigkeit nimmt den dort eingeklemmten Rohrbereichen Raum weg. Bei wiederholten Heiz- und Kühlzyklen verliert der Kunststoff nach und nach seine Eigenspannung und die Ursprungsabmessungen, so daß eine Langzeitdichtheit nicht mehr gewährleistet ist. Man ist deshalb dazu übergegangen, die Dichtheit der Rohrverbindung durch zusätzliches Vorsehen von Dichtungsringen zu gewährleisten (WO 92/09840) und muß dann wieder deren oben beschriebenen Nachteile in Kauf nehmen.

Beim Einsatz in der Trinkwasserversorgung besteht ein weiteres Problem darin, daß im Bereich der Rohrkupplung keine Hohlräume entstehen dürfen, da sich in ihnen kleine Lebewesen, wie Keime oder dergleichen, sammeln und aufhalten können. Insbesondere bei als Preßfittings ausgebildeten Rohrkupplungen gibt es solche Hohlräume zwischen Preßfitting und den Rohrendbereichen. Hinzu kommt, daß Dichtungsringe mit der Zeit porös werden und den Aufenthalt von solchen Lebewesen begünstigen. Soweit Kunststoffrohre betroffen sind, entstehen durch die oben beschriebenen Dehn- und Schrumpfungsprozesse Spalten und Hohlräume, die direkten Kontakt mit dem Fluid haben. In die Hohlräume können ferner auch gelöste Stoffe, beispielsweise Magnesium- oder Calciumcarbonate, eindringen und sich dort ablagern und hierdurch die Grenzfläche zwischen Rohrendbereichen und Stützhülse verschieben. Dies begünstigt das Eindringen von Wasser.

Der Erfindung liegt die Aufgabe zugrunde, ein Verfahren der eingangs genannten Art so zu gestalten, daß eine zuverlässige Abdichtung zwischen Rohrkupplung und Rohren, insbesondere von Kunststoff- und Verbundrohren, auf lange Zeit gewährleistet ist. Aufgabe der Erfindung ist es weiterhin, eine hierzu geeignete Verbindung zwischen Rohrkupplung und Rohren sowie eine Rohrkupplung hierfür bereitzustellen.

Was den ersten Teil der Aufgabe angeht, besteht die Lösung erfindungsgemäß darin, daß dem Rohr über eine sich an der Rohrkupplung abstützende Federeinrichtung eine die Dichtflächen belastende Axialkraft aufgeprägt wird.

Grundgedanke der Erfindung ist somit, dem Rohr eine definierte Axialkraft aufzuprägen, die die aufeinanderliegenden Dichtflächen gegeneinander preßt und so für eine zuverlässige Abdichtung sorgt. Es versteht sich, daß die Axialkraft so bemessen sein muß, daß die Belastung der Dichtflächen bei den voraussichtlich auftretenden Betriebsbedingungen und der vorgesehenen Lebensdauer immer in ausreichendem Maße aufrechterhalten bleibt.

Der Vorzug der erfindungsgemäßen Lösung liegt zum einen darin, daß eine zuverlässige Abdichtung mit hoher Langzeitstabilität erreicht wird, selbst wenn das Rohr großen Temperaturschwankungen ausgesetzt ist, und zwar auch dann, wenn auf einen zusätzlichen Dichtungsring verzichtet wird. Zur Fluidseite hin ist prinzipiell nur eine Dichtstelle erforderlich, so daß keine Hohlräume entstehen, in die Wasser eindringen kann.

Es versteht sich, daß von der Lehre der Erfindung auch dann Gebrauch gemacht wird, wenn das Verfahren an einer Stützhülse mehrfach hintereinander angewendet wird, so daß eine redundante Abdichtung erzielt wird. Gewöhnlich reicht jedoch die einmalige Anwendung des Verfahrens aus. Dabei läßt sich das Verfahren auch an Rohrkupplungen mit Verzweigungen anwenden, welche mehr als zwei Stützhülsen haben, da es um die Anwendung des Verfahrens an jeweils einer Stützhülse geht.

Die Axialkraftaufprägung sollte vorzugsweise erst dann erfolgen, wenn eine Formschlußverbindung zwischen Eingriffseinrichtung und Rohr hergestellt ist, d. h. gleichzeitig mit oder nach der Verpressung des Rohrs.

Die Federeinrichtung muß nicht als zusätzliches Bauteil vorliegen, sondern kann im Wege der Verpressung des Rohrendes aus dem Rohr selbst hergestellt werden, indem ein Rohrabschnitt zwischen Abdichtung und einer zum Rohrende hin beabstandeten Stützeinrichtung unter Aufprägung der Axialkraft eingespannt wird und indem dem Rohr auf der zum Rohrende gehenden Seite der Eingriffseinrichtung eine radiale Ausdehnungsmöglichkeit gegeben wird. Die Einspannung sorgt für eine in Richtung auf die Abdichteinrichtung wirkende Axialkraft, wobei der Rohrabschnitt aufgrund der erfindungsgemäß vorgesehenen Ausdehnungsmöglichkeit nachgiebig federnd ausweichen kann und es somit nicht zu einem Masseverlust beim Rohrabschnitt kommt. Die Federwirkung bleibt deshalb auch bei Temperaturwechsel in dem vorgesehenen Umfang erhalten.

Das vorstehende Verfahren eignet sich insbesondere für reine Kunststoffrohre. Das Kunststoffmaterial hat nämlich bei einer Temperaturerhöhung insofern ein besonderes Verhalten, als zwei gegenläufige Tendenzen einwirken. Zum einen dehnt sich das Material aus, wodurch eine Tendenz zur Erhöhung der Axialkraft entsteht. Zum anderen wird das Kunststoffmaterial jedoch bei hohen Temperaturen weich mit der Tendenz zum Spannungsabbau. Insgesamt entsteht hierdurch eine Federcharakteristik, die bei hohen Temperaturen das Entstehen einer zu hohen Axialkraft vermeidet, d. h. die sich zunächst aufgrund der Ausdehnung des Materials erhöhende Axialkraft wird wieder abgebaut. Dies trägt dazu bei, daß es nicht zu einem Materialverlust über die Eingriffseinrichtung hinaus kommt.

Die Einspannung geschieht zweckmäßigerweise derart, daß das Rohr auch im Bereich der Stützeinrichtung in Richtung auf die Stützhülse unter Aufprägung der Axialkraft verpreßt wird. Die beidseitige Verpressung und Festlegung des Rohrabschnitts mittels der Eingriffseinrichtung und der Stützeinrichtung läßt in dem Rohrabschnitt einen Stauchdruck entstehen und führt auch zu einer Wölbung des Rohrabschnitts unter Ausbildung einer Federwirkung. Bei weicheren Kunststoffrohren ist es zudem zweckmäßig, wenn über das Rohr wenigstens im Bereich der Eingriffseinrichtung jeweils ein Preßring geschoben und der Preßring bzw. die Preßringe unter plastischer Verformung mitverpreßt werden.

Die Stützeinrichtung - wie auch die Eingriffseinrichtung - kann als zugespitzter Ringsteg ausgebildet sein, so daß er beim Verpressen in das Rohrmaterial eindringt. Es besteht jedoch auch die Möglichkeit, die Stützeinrichtung so auszubilden, daß sie von der Stirnseite des Rohrendes her wirkt. Beispiele für die verschiedenen Ausbildungen von Stützeinrichtungen sind den in den Zeichnungen dargestellten Versionen zu entnehmen.

Bei Rohren geringer Elastizität, wie beispielsweise Verbundrohren, steifen Kunststoffrohren oder Metallrohren, ist es zweckmäßig, wenn als Federeinrichtung ein zusätzliches Bauteil verwendet wird und wenn die Federeinrichtung nach dem Aufschieben des Rohrs auf die Stützhülse in Wirkverbindung mit dem Rohr unter Aufprägung der Axialkraft gebracht wird. Diese Ausbildung läßt es bei Verbundrohren zu, die Wanddicke der Innenbeschichtung erheblich zu reduzieren und dabei nur so dick zu machen, daß noch eine formschlüssige Verbindung mit der Eingriffseinrichtung möglich ist. Dabei sollte vermieden werden, daß eine Berührung mit dem Aluminiumrohr des Verbundrohrs stattfindet, um intermetallische Korrosion zu vermeiden.

Die Wirkverbindung zwischen Federeinrichtung und Rohr kann auf vielfältige Weise geschehen, wie dies die Ausführungsbeispiele zeigen. Besonders vorteilhaft ist es, wenn die Federeinrichtung zur Herstellung der wirkverbindung wenigstens teilweise in Richtung auf die Stützhülse verpreßt wird. Dies hat den Vorzug, daß das Aufschieben des Rohrs auf die Rohrkupplung ohne Komprimierung der Federeinrichtung geschehen kann. Erst mit der Verpressung auch der Federeinrichtung wird die Axialkraft aufgeprägt, wobei die Verpressung in einem Arbeitsgang mit der Verpressung des Rohrs zwecks Herstellung der Formschlußverbindung oder zeitlich danach geschehen kann. Durch die Form der Preßbacken kann sichergestellt werden, daß die verpressung der Federeinrichtung nicht zu früh erfolgt. Selbstverständlich muß die Verpressung der Federeinrichtung in der Weise vorgenommen werden, daß ihre Eigenschaft als Feder noch erhalten bleibt, sie also elastisch nachgeben kann.

Alternativ dazu kommt jedoch auch eine Federeinrichtung in Frage, die ein vorgespanntes Federelement aufweist und bei der das Federelement zum Zwecke der Axialkraftaufprägung freigegeben wird, und zwar nach Herstellung der Formschlußverbindung zwischen Rohr und Stützhülse.

Die Einwirkung der Federeinrichtung kann von der Stirnseite des Rohrs her geschehen. Es besteht jedoch auch die Möglichkeit, die Federeinrichtung über die außeh- oder innenseitige Mantelfläche des Rohrs wirken zu lassen, indem beim und durch das Verpressen eine formschlüssige Verbindung zwischen Federeinrichtung und Mantelfläche erzeugt wird. Dies ist insbesondere bei Verbundrohren von Vorteil, da auf diese Weise eine intermetallische Korrosion mit Metallteilen der Federeinrichtung vermieden wird. Außerdem ist es nicht erforderlich, das Rohr beim Einschieben in Kontakt mit der Federeinrichtung zu bringen. Dies wäre mit erheblichen Unsicherheiten verbunden. Es sollte allerdings Vorsorge getroffen sein, daß das Rohr sich bei Temperaturerhöhung zum Rohrende hin ausdehnen kann.

Was die Verbindung zwischen dem Rohr und der Rohrkupplung angeht, wird die Aufgabe dadurch gelöst, daß wenigstens eine Federeinrichtung vorgesehen ist, welche sich an der Rohrkupplung über eine Stützeinrichtung abstützt und eine die Dichtflächen belastende Axialkraft erzeugt. Wie schon oben zum erfindungsgemäßen Verfahren beschrieben, zeichnet sich diese Verbindung durch zuverlässige Abdichtung mit Langzeitstabilität und durch geringe Herstellungskosten aus. Zudem werden Hohlräume, in denen sich das Fluid einlagern kann, vermieden.

Insbesondere bei Vollkunststoffrohren kann die Federeinrichtung als Rohrabschnitt ausgebildet sein, der zwischen der Eingriffseinrichtung und einer zum Rohrende hin beabstandeten Stützeinrichtung unter Aufprägung der Axialkraft eingespannt ist und für den ein radialer Ausdehnungsfreiraum vorgesehen ist. Der Rohrabschnitt kann sich aufgrund des erfindungsgemäß vorgesehenen Ausdehnungsfreiraums bei Temperaturschwankungen verformen, so daß seine Federeigenschaft und damit auch die in Richtung auf die Dichteinrichtung wirkende Axialkraft aufrecht erhalten bleiben.

Die Einspannung kann durch Verpressen des Rohrs auch im Bereich der Stützeinrichtung in Richtung auf die Stützhülse erfolgen, wobei die verpressung zweckmäßigerweise gleichzeitig im Bereich der Eingriffseinrichtung und der Stützeinrichtung erfolgt. Dabei kann die Stützeinrichtung ebenfalls als Eingriffseinrichtung - vorzugsweise spiegelbildlich zu der die Formschlußverbindung bewirkenden Eingriffseinrichtung - ausgebildet sein, so daß mit der Innenseite des Rohrs eine formschlüssige Verbindung hergestellt wird. Alternativ dazu kann vorgesehen sein, daß die Stützeinrichtung als Stützring ausgebildet ist, an dem sich die Stirnseite des Rohrendes nach der Verpressung abstützt.

Wie schon zu dem Verfahren gesagt, empfiehlt sich bei harten Kunststoffrohren, Verbundrohren und Metallrohren die Ausbildung der Federeinrichtung als zusätzliches Bauteil, das in einer die Axialkraft aufprägend wirksamen Verbindung mit dem Rohr steht. Die Federeinrichtung stellt sicher, daß auch bei solchen Rohren eine hinreichende Axialkraft unter allen vorgesehenen Betriebsbedingungen aufgeprägt wird. Dabei kommt als Federeinrichtung insbesondere wenigstens ein unter Spannung stehendes, elastisches Federelement in Frage, daß direkt oder indirekt mit dem Rohr verbunden ist. Dieses Federelement kann eine Stahlfeder sein, beispielsweise in Form einer Schrauben- oder Tellerfeder, die die Stützhülse umgibt, oder aber auch eine Kunststoffeder. Statt der Kunststoffeder können auch über den Umfang der Stützhülse verteilte Kunststoffelemente vorgesehen sein. Die Verwendung von Kunststoffmaterial für das bzw. die Federelement(e) hat den schon oben erwähnten Vorteil bezüglich seiner Federcharakteristik, die bei hohen Temperaturen das Entstehen einer zu hohen Axialkraft vermeidet. Bei Verbundrohren ist es von Vorteil, wenn das Material des Kunststoffrings bzw. der Kunststoffelemente identisch ist mit dem Kunststoff der außen- und innenseitigen Beschichtung des Verbundrohrs, also insbesondere vernetztes Polyethylen.

Ein solches Federelement ist zweckmäßigerweise über eine Preßhülse verspannt, die bei der Herstellung der Verbindung zwecks Aufbringung der Axialkraft plastisch verpreßt worden ist. Dabei kann sich die Preßhülse über das Rohr erstrecken und mit diesem dort verpreßt sein, vorzugsweise im Bereich der Eingriffseinrichtung, die den Formschluß zwischen Rohr und Stützhülse herstellt.

Nach einem weiteren Merkmal der Erfindung ist vorgesehen, daß die innenseitige Mantelfläche eine zum Rohrende hin gerichtete, axiale Abstützfläche aufweist, auf die die Federeinrichtung einwirkt. Die Abstützfläche ist vorzugsweise beim Verpressen unter Ausbildung einer Einschnürung eingeformt, wobei dann das Federelement in das Rohr hineinreicht und mit diesem verpreßt ist. Diese Ausführungsform eignet sich vor allem für Metallrohre, wobei es dann zweckmäßig ist, einen Dichtring einzulegen. Eine der Dichtflächen kann dabei von der Einschnürung gebildet werden, während die andere Dichtfläche beispielsweise als Ringsteg ausgebildet sein kann.

Die Federeinrichtung kann aber auch als Federhülse ausgebildet sein, die zwischen Abstützung an der Rohrkupplung und Rohrende verpreßt ist und mit dem Rohr überlappt und auch dort mit dem Rohr verpreßt ist.

Der dritte Teil der Aufgabe ist erfindungsgemäß durch eine Rohrkupplung mit wenigstens einer Federeinrichtung gekennzeichnet, welche sich axial federnd an der Rohrkupplung abstützt und derart in Wirkverbindung mit einem auf der Stützhülse aufschiebbaren Rohr bringbar ist, daß eine Axialkraft auf das Rohr ausgeübt wird. Aus dem vorstehenden ergibt sich, wie die Federeinrichtung im einzelnen ausgebildet sein kann. Besonders vorteilhaft ist es, wenn die Federeinrichtung axial unverrückbar an der Rohrkupplung angebracht und damit Teil der Rohrkupplung ist.

In der Zeichnung ist die Erfindung anhand von Ausführungsbeispielen näher veranschaulicht. Es zeigen:
- Fig. 1: einen Längsschnitt durch den oberen Teil einer ersten Rohrkupplung mit Rohr vor der Verpressung;
- Fig. 2: die Darstellung gemäß Fig. 1 nach der Verpressung;
- Fig. 3: die Darstellung gemäß den Figuren 1 und 2 bei Erwärmung des Rohrs;
- Figuren 4 bis 10: verschiedene Ausführungsformen von Preßhülsen;
- Fig. 11: einen Längsschnitt durch den oberen Teil einer zweiten Rohrkupplung mit Rohr vor der Verpressung;
- Fig. 12: die Darstellung gemäß Fig. 11 nach der Verpressung;
- Fig. 13: die Darstellung gemäß den Figuren 11 und 12 bei Erwärmung des Rohrs;
- Fig. 14: einen Längsschnitt durch den oberen Teil einer dritten Rohrkupplung mit Rohr vor der Verpressung;
- Fig. 15: einen Längsschnitt durch den oberen Teil einer vierten Rohrkupplung mit Rohr vor der Verpressung;
- Fig. 16: die Darstellung gemäß Fig. 15 nach der Verpressung;
- Fig. 17: einen Längsschnitt durch den oberen Teil einer fünften Rohrkupplung mit Rohr vor der Verpressung;
- Fig. 18: die Darstellung gemäß Fig. 17 nach der Verpressung;
- Fig. 19: einen Längsschnitt durch den oberen Teil einer sechsten Rohrkupplung mit Rohr vor der Verpressung;
- Fig. 20: einen Längssschnitt durch den oberen Teil einer siebten Rohrkupplung mit Rohr vor der Verpressung und
- Fig. 21: die Darstellung gemäß Fig. 20 nach der Verpressung;
- Fig. 22: einen Längsschnitt durch den oberen Teil einer achten Rohrkupplung mit Rohr vor der Verpressung;
- Fig. 23: die Darstellung gemäß Fig. 22 nach der Verpressung;
- Fig. 24: einen Längsschnitt durch den oberen Teil einer neunten Rohrkupplung mit Rohr vor der Verpressung;
- Fig. 25: die Darstellung gemäß Fig. 24 nach der Verpressung;
- Fig. 26: einen Längsschnitt durch den oberen Teil einer zehnten Rohrkupplung mit Rohr vor der Verpressung;
- Fig. 27: die Darstellung gemäß Fig. 26 nach der Verpressung;
- Fig. 28: einen Längsschnitt durch den oberen Teil einer elften Rohrkupplung mit Rohr vor der Verpressung;
- Fig. 29: die Darstellung gemäß Fig. 28 nach der Verpressung;
- Fig. 30: einen Längsschnitt durch den oberen Teil einer zwölften Rohrkupplung mit Rohr vor der Verpressung;
- Fig. 31: die Darstellung gemäß Fig. 30 nach der Verpressung;
- Fig. 32: einen Längsschnitt durch den oberen Teil einer dreizehnten Rohrkupplung mit Rohr vor der Verpressung;
- Fig. 33: die Darstellung gemäß Fig. 32 nach der Verpressung;
- Fig. 34: einen Längsschnitt durch den oberen Teil einer vierzehnten Rohrkupplung mit Rohr vor der Verpressung;
- Fig. 35: die Darstellung gemäß Fig. 34 nach der Verpressung;
- Fig. 36: einen Längsschnitt durch den oberen Teil einer fünfzehnten Rohrkupplung mit Rohr vor der Verpressung;
- Fig. 37: die Darstellung gemäß Fig. 36 nach der Verpressung;
- Fig. 38: einen Längsschnitt durch den oberen Teil einer sechszehnten Rohrkupplung mit Rohr vor der Verpressung und
- Fig. 39: die Darstellung gemäß Figur 38 nach der verpressung.

In der nachstehenden Beschreibung der verschiedenen Ausführungsbeispiele sind gleiche oder funktionsgleiche Teile mit gleichen Bezugsziffern versehen. Soweit im Einzelfall in der jeweiligen Figur aufgeführte Bezugsziffern nicht im zugehörigen Beschreibungsteil erläutert wird, wird auf vorangehende Erläuterungen zu dieser Bezugsziffer verwiesen.

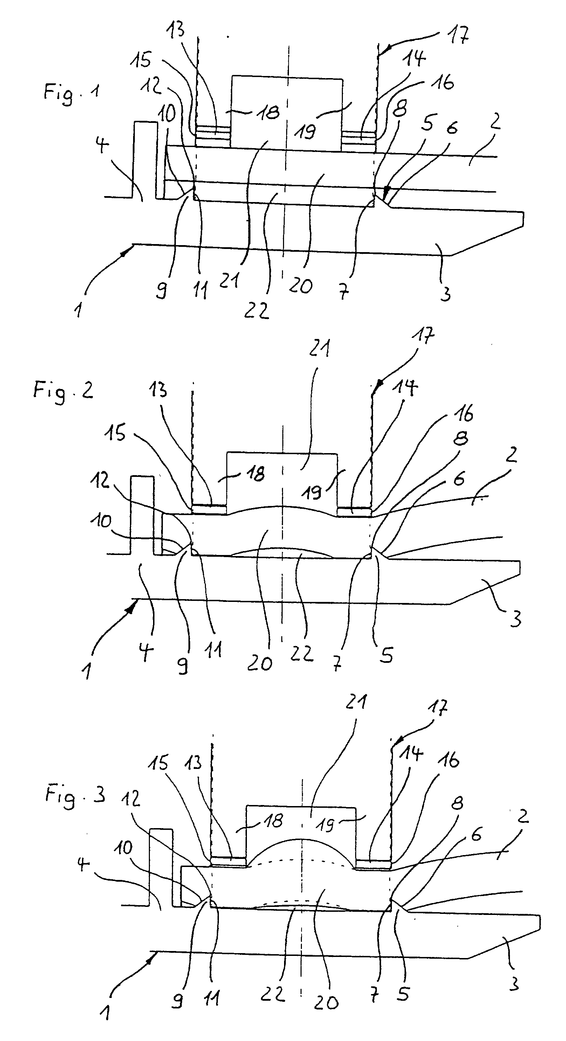

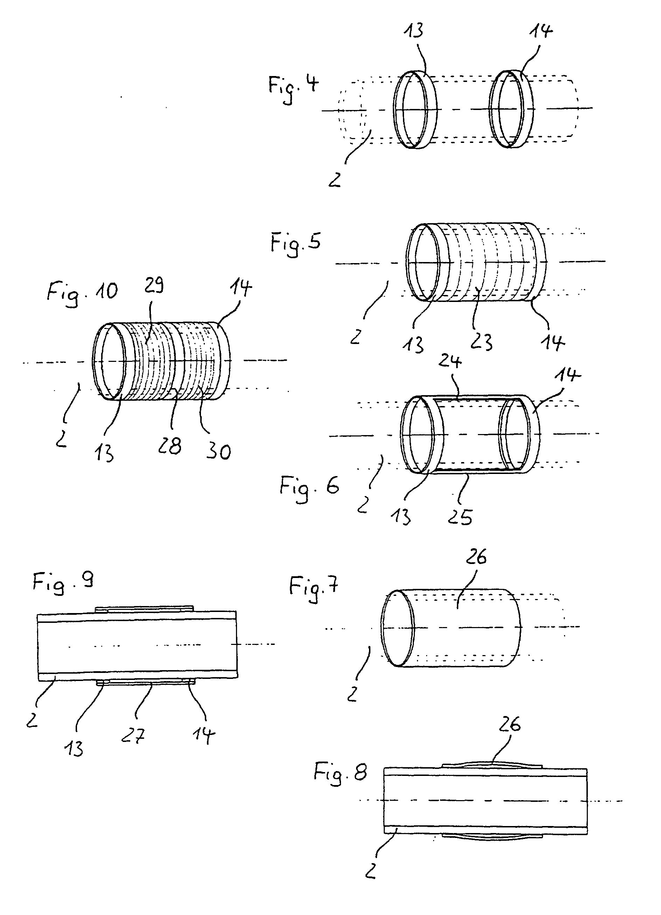

Die Figuren 1 bis 3 zeigen das Verfahren zur Verbindung zwischen dem rechten Teil einer ersten Rohrkupplung 1 und dem Endbereich eines Rohrs 2. Dabei ist jeweils die obere Hälfte dargestellt. Die untere Hälfte ist weggelassen, weil die Rohrkupplung 1 - wie alle hier dargestellten Rohrkupplungen - und ebenso auch das Rohr 2 rotationssymmetrisch sind.

Die Rohrkupplung 1 hat eine rechte Stützhülse 3 mit kreisrundem Querschnitt. Sie ist an einem Mittelstück 4 der Rohrkupplung 1 angeformt und besteht aus einem für den jeweiligen Einsatzzweck passenden Metall oder Kunststoff

Benachbart zum freien Ende der Stützhülse 3 steht nach außen hin ein die Stützhülse 3 ringförmig umgebender Dichtsteg 5 vor, der dreiecksförmigen Querschnitt hat. Zum freien Ende der Stützhülse 3 hin hat er eine konische Schräge 6, während er zum Mittelstück 4 gerichtet eine Dichtfläche 7 aufweist, die sich senkrecht zur Achse der Stützhülse 3 erstreckt. Dichtfläche 7 und konische Schräge 6 laufen zu einer spitzen Kante 8 zu.

Benachbart zu dem Mittelstück 4 trägt die Stützhülse 3 außenseitig einen Stützsteg 9, der spiegelbildlich zu dem Dichtsteg 5 ausgebildet ist, also zum Mittelstück 4 hin eine konische Schräge 10 und auf den Dichtsteg 5 gerichtet eine senkrechte Anschlagfläche 11 aufweist. Beide treffen sich in einer spitzen Kante 12.

Über die Stützhülse 3 ist das Rohr 2 bis nahe an das Mittelstück 4 geschoben. Das Rohr 2 besteht in diesem Fall aus einem Kunststoffmaterial, beispielsweise vernetztem Polyethylen oder Polypropylen. Im Ausgangszustand hat die Innenseite des Rohres 2 Abstand zu den Kanten 8, 12 des Dichtstegs 5 bzw. des Stützstegs 9. Aüßenseitig ist das Rohr 2 von zwei Preßringen 13, 14 umgeben. Sie sind so angeordnet, daß ihre jeweils einander abgewandten Stirnseiten 15, 16 mit den Dicht- bzw. Anschlagflächen 7 bzw. 11 fluchten.

Die Preßringe 13, 14 werden von einer schematisch dargestellten Preßbacke eines Preßgeräts umgeben, welches sich von den normalerweise für die Herstellung solcher Rohrverbindungen verwendeten Preßgeräten nur durch die besondere Formgebung der Preßbacke 17 auf deren Innenseite unterscheidet. Diese Formgebung ist dadurch gekennzeichnet, daß die Preßbacke 17 zwei beabstandete Preßstege 18, 19 aufweist, die die Breite und Anordnung der Preßringe 13, 14 haben, so daß die Einwirkung der Preßbacke 17 auf die Preßringe 13, 14 begrenzt bleibt. Die Außenkanten der Preßstege 18, 19 fluchten demgemäß mit den Stirnseiten 15, 16 der Preßringe 13, 14 und folglich auch mit den Anschlagflächen 7, 11.

Ausgehend von der in Fig. 1 dargestellten Situation erfolgt die Verpressung durch Bewegung der Preßbacke 17 radial nach innen. Die Preßbacke 17 ist halbkreisförmig ausgebildet, weshalb eine weitere, ebenfalls halbkreisförmige Preßbacke vorgesehen ist, die hier nicht dargestellt ist. In üblicher Weise werden die beiden Preßbacken 17 radial nach innen aufeinanderzu bewegt, wobei sie in ihrer Endstellung einen geschlossenen Preßraum einschließen. Durch die Bewegung der Preßbacke 17 werden die Preßringe 13, 14 radial nach innen plastisch verformt. Im weiteren Verlauf wird auch das Rohr 2 im Bereich beider Preßringe 13, 14 unter plastischer Verformung eingeschnürt. Dabei kommt es zu einem Materialfluß in axialer Richtung, und zwar in beiden Richtungen unter Änderung der Wanddicke des Rohrs 2. Hierdurch entsteht zwischen den beiden Preßringen 13, 14 ein Rohrabschnitt 20 des Rohrs 2, das in der Radialbewegung zurückbleibt, so daß sich - wie aus Fig. 2 zu ersehen - eine radial nach außen gerichtete Auswölbung des Rohrabschnitts 20 ergibt. Das Eingraben von Dichtsteg 5 und Stützsteg 9 in das Rohr 2 bewirkt, daß der Materialfluß vom Rohrabschnitt 20 weg unterbunden wird. Da sich das Rohrmaterial den Weg des geringsten Widerstandes sucht, wird das bei Fortsetzung der Verpressung verdrängte Rohrmaterial nunmehr ausschließlich in den Rohrabschnitt 20 fließen und hier eine Verdichtung herbeiführen. Der Rohrabschnitt 20 wird axial gestaucht und bildet dabei eine komprimierte Druckfeder. Den Endzustand zeigt Fig. 2, aus der ersichtlich ist, daß Dichtsteg 5 und Stützsteg 9 vollständig in das Material des Rohrs 2 eingegraben sind und daß der Rohrabschnitt 20 infolge Nichteinwirkung der Preßbacke 17 und Materialverdrängung im Bereich der Preßringe 13, 14 eine radiale Auswölbung erhalten hat. Dabei übt der gestauchte Rohrabschnitt 20 eine Axialkraft auf die Dichtfläche 7 des Dichtstegs 5 und die Anschlagfläche 11 des Stützstegs 9 aus, wobei die Dichtfläche 7 des Dichtstegs 5 als Abdichtung zur Fluidseite hin wirkt.

Fig. 3 zeigt die Formänderung des Rohrs 2 bei Erwärmung, wobei die Wölbung gemäß Fig. 2 gestrichelt dargestellt ist. Da der Rohrabschnitt 20 zwischen Dichtsteg 5, Stützsteg 9 und den Preßringen 13, 14 fest eingespannt ist, ergibt sich kein Materialfluß aus dem Rohrabschnitt 20 heraus. Das Ausdehnen und Fließen des Kunststoffs bleibt auf den Rohrabschnitt 20 begrenzt, wobei sich der Rohrabschnitt 20 sowohl radial nach außen als auch radial nach innen zwischen den Preßringen 13, 14 ausdehnt. Da dort Ausdehnungsfreiräume 21, 22 vorgesehen sind, wird die Ausdehnungsbewegung und damit die Federwirkung des Rohrabschnitts 20 nicht behindert und die Dichtwirkung insbesondere an der Dichtfläche 7 nicht beeinträchtigt.

Beim Kühlen schrumpft das Kunststoffmaterial wieder zusammen, und der Rohrabschnitt 20 nimmt wieder die in Fig. 2 gezeigte Formgebung an. Auch hierbei bleibt die Abdichtung im Bereich der Dichtfläche 7 und Anschlagfläche 11 erhalten. Dabei reicht die Abdichtung an der Dichtfläche 7 des Dichtstegs 5 vollständig aus, um die gewünschte Dichtwirkung zu erreichen.

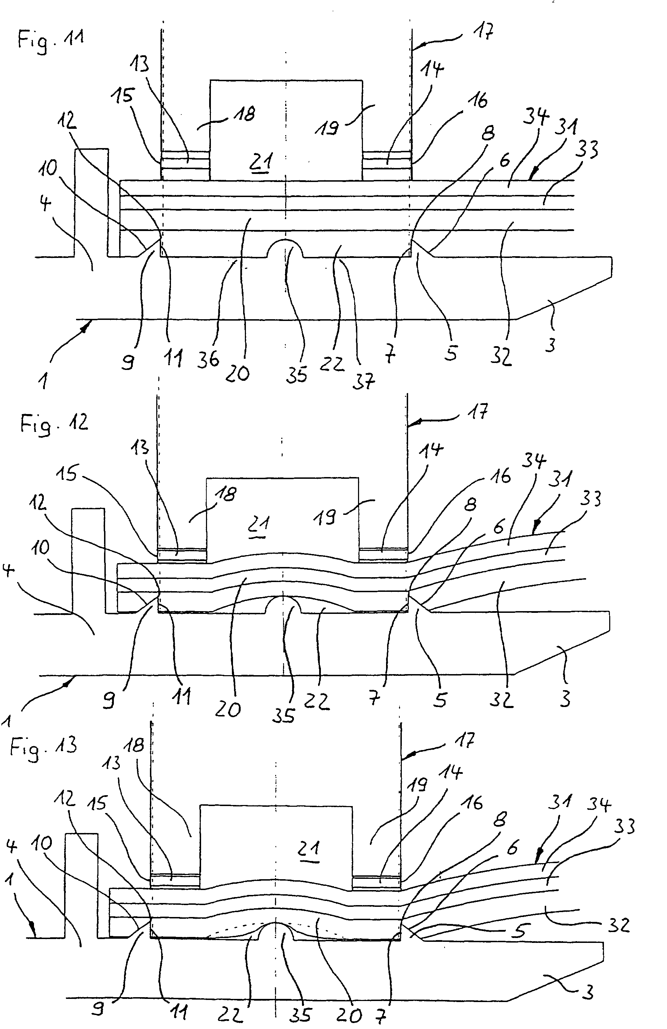

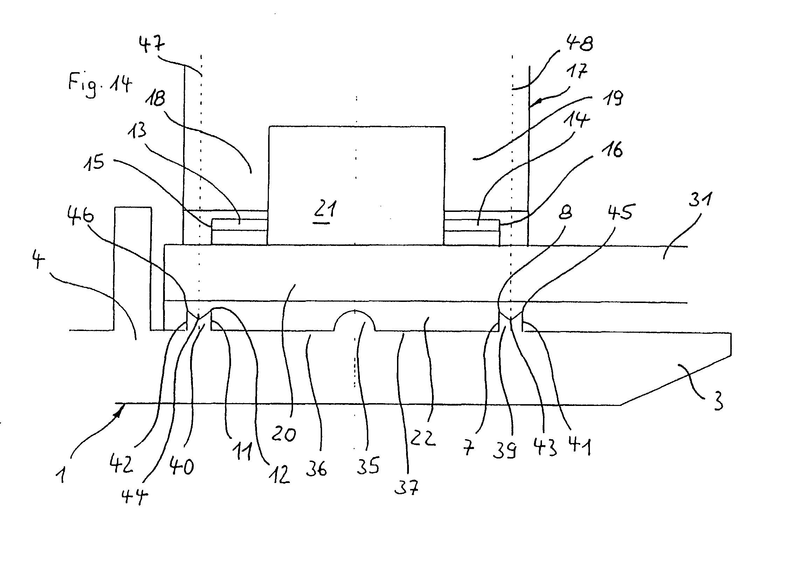

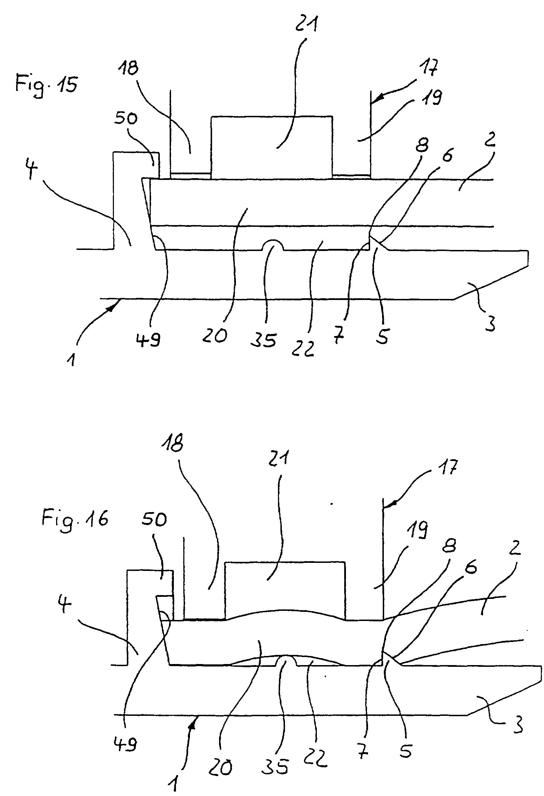

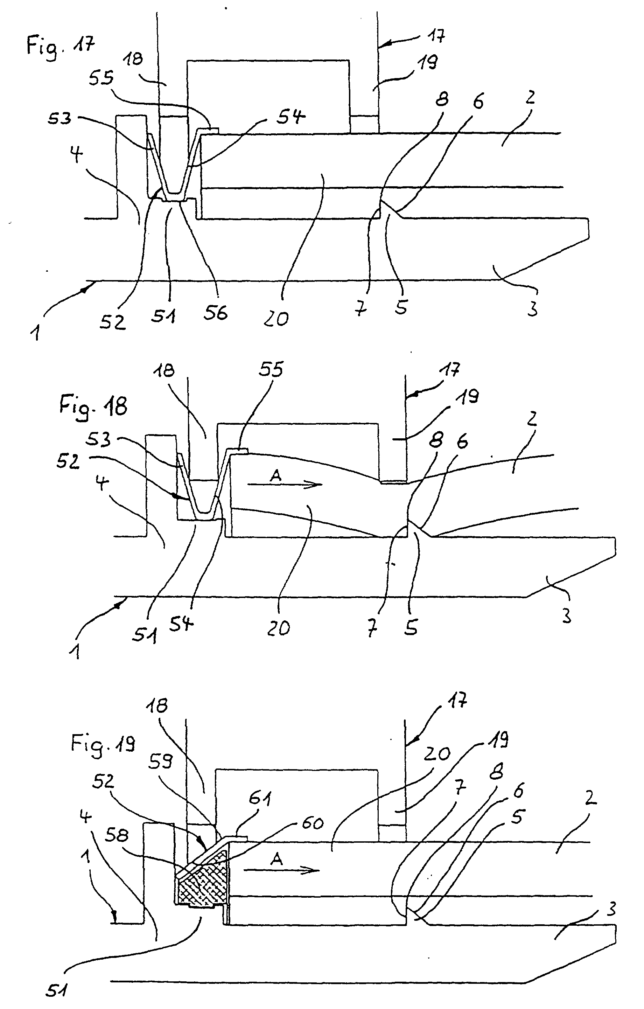

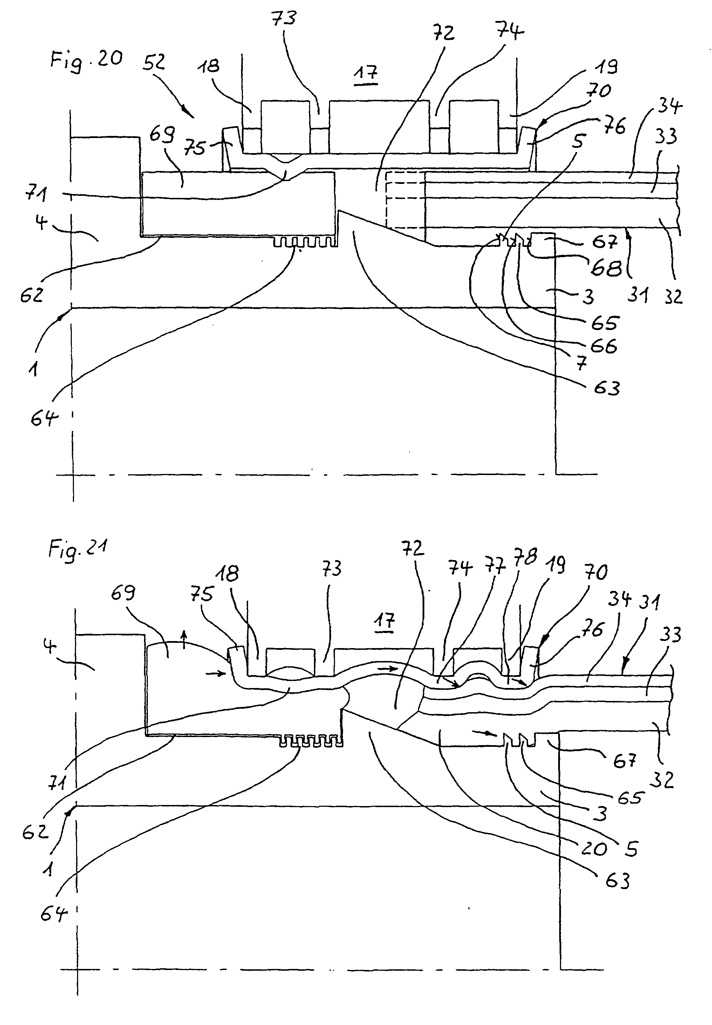

Die Figuren 4 bis 10 zeigen verschiedene Ausführungsformen zur Ausbildung von Preßringen, wobei das Rohr 2, soweit es perspektivisch dargestellt ist, nur gestrichelt angedeutet ist. In Fig. 4 sind die aus den Figuren 1 bis 3 bekannten Preßringe 13, 14 zu sehen. Zur besseren Handhabung dieser Preßringe 13, 14 sind sie gemäß Fig. 5 durch eine verformbare Kunststoffhülse 23 miteinander verbunden, die die radiale Auswölbung des Zwischenstücks 20 nach außen nicht behindert. Bei dem Ausführungsbeispiel gemäß Fig. 6 sind die beiden Preßringe 13, 14 über zwei biegsame Kunststoffstege 24, 25 miteinander gekoppelt, die gleichfalls die Ausdehnung des Zwischenstücks 20 nicht behindern können.

Die Ausführungsbeispiele gemäß den Figuren 7 und 8 ähneln sich insoweit, als hier statt zwei separater Preßringe eine durchgehende Preßhülse 26 aus Metall verwendet wird, die jedoch entsprechend dem sich aus den Figuren 1 bis 3 ergebenden Verfahren nur in den Außenbereichen verpreßt wird, so daß die Zwischenbereiche ihren Durchmesser nahezu behalten und somit einen Ausdehnungsfreiraum 21 für die Auswölbung des Zwischenstücks 20 zur Verfügung stellen. Dies kann durch eine Auswölbung der Preßhülse 26 selbst noch unterstützt werden, wie sie sich aus Fig. 8 ergibt.

Ähnliches kann mit der Ausführungsform gemäß Fig. 9 erzielt werden. Hier werden die Preßringe 13, 14 durch eine außenseitig übergreifende Hülse 27 verbunden, so daß auch hier ein ausreichender Ausdehnungsfreiraum zur Verfügung gestellt wird.

Eine besondere Ausführungsform zeigt Fig. 10. Hier ist zwischen den beiden Preßringen 13, 14 ein Mittelring 28 angeordnet, der mit den Preßringen 13, 14 über Kunststoffhülsen 29, 30 verbunden ist, so daß eine handhabbare Einheit vorliegt. Der Mittelring 28 dient lediglich als Begrenzungsring. Er nimmt zwar nicht an der Verpressung teil, so daß er seinen Durchmesser während des Pressens nicht verkleinert. Er soll ein Auswölben des Zwischenstücks 20 des Rohrs 2 über ein bestimmtes Maß hinaus verhindern, damit es dort nicht zu einem Rohrbruch kommt.

Die Darstellung gemäß den Figuren 11 bis 13 weicht von der gemäß den Figuren 1 bis 3 im wesentlichen nur insoweit ab, als statt eines vollständig aus Kunststoff bestehenden Rohres 2 hier ein Verbundrohr 31 mit der Rohrkupplung 1 verbunden wird. Das Verbundrohr 31 ist dreischichtig aufgebaut. Es hat innenseitig eine Kunststoffschicht 32, in der Mitte ein Aluminiumrohr 33 und außenseitig eine Schutzschicht 34 ebenfalls aus Kunststoff.

Die Rohrkupplung 1 unterscheidet sich von der gemäß den Figuren 1 bis 3 lediglich dadurch, daß in der Mitte zwischen Dichtsteg 5 und Stützsteg 9 eine im Querschnitt halbrunde, die Stützhülse 3 ringförmig auf der Außenseite umgebende Stützrippe 35 ausgebildet ist, wobei - fakultativ - neben der Stützrippe 35 flache Ringnuten 36, 37 ausgebildet sein können, die den Ausdehnungsfreiraum 22 zwischen Verbundrohr 31 und Stützhülse 3 vergrößern. Ansonsten wird hinsichtlich der in den Figuren 11 bis 13 eingezeichneten Bezugsziffern auf die Beschreibung zu den Figuren 1 bis 3 Bezug genommen, soweit sie hier nicht näher erläutert sind.

Bei der Verpressung des Verbundrohrs 31 aus der in Fig. 11 gezeigten Stellung in die Stellung gemäß Fig. 12 wird das Aluminiumrohr 33 mitverpreßt. Dabei setzt es allerdings einen gewissen Widerstand gegen die oben beschriebene Verdrängung des Kunststoffs der innenseitigen Kunststoffschicht 32 entgegen, so daß für dieses Material nur der Ausdehnungsfreiraum 22 zwischen der Innenseite des Verbundrohrs 31 und der Außenseite der Stützhülse 3 zur Verfügung steht. Der Ausbildung des Ausdehnungsfreiraums 22 förderlich ist dabei die Stützrippe 35, da sie verhindert, daß sich die Kunststoffschicht 32 vollständig an die Stützhülse 34 anlegt. Aus Fig. 2 ist zu ersehen, daß hierdurch neben der Stützrippe 35 ausreichend Ausdehnungsfreiraum 22 gebildet wird. Sollte er im Einzelfall nicht ausreichen, kann der Ausdehnungsfreiraum 22 durch Ausformung der schon erwähnten Ringnuten 36, 37 vergrößert werden.

Fig. 12 zeigt die Formgebung des Verbundrohrs 31 nach der Verpressung bei Verpressungs-, d. h. Umgebungstemperatur. Strömt ein heißes Medium durch das Verbundrohr 31, kommt es zu einer Wärmedehnung des Verbundrohres 31 und hier insbesondere der Kunststoffschicht 32 und der Schutzschicht 34. Da das Material der Kunststoffschicht 32 durch den Dichtsteg 5 und den Stützsteg 9 daran gehindert ist, nach außen zu fließen, wird es sich - dem Weg des geringsten Widerstands folgend - nach innen hin ausdehnen, d. h. der Ausdehnungsfreiraum 22 füllt sich mit dem Material der Kunststoffschicht 32. Gleichzeitig bleibt die Federwirkung dieser Schicht und damit der Anpreßdruck an der Dichtfläche 7 und der Anschlagfläche 11 erhalten, d. h. die Dichtwirkung der Verbindung zwischen Rohrkupplung 1 und Verbundrohr 31 wird nicht beeinträchtigt.

In Fig. 14 ist eine Ausführungsform dargestellt, die nur in den nachstehenden Punkten von der gemäß den Figuren 11 bis 13 gezeigten abweicht, so daß ergänzend auf dessen Beschreibung Bezug genommen wird. Die Rohrkupplung 1 weist hier einen Dichtsteg 39 und einen Stützsteg 40 auf, die zwar beide an der jeweils gleichen Stelle wie der Dichtsteg 5 bzw. Stützsteg 9 bei den Ausführungsbeispielen gemäß den Figuren 1 bis 3 und 11 bis 13 angeordnet sind, jedoch eine andere Formgebung haben. Dichtsteg 39 und Stützsteg 40 weisen nicht nur an den einander zugewandten Seiten Dicht- bzw. Anschlagflächen 7, 11, sondern auch an den einander abgewandten Seiten Dicht- bzw. Anschlagflächen 41, 42 auf. Zwischen den jeweils zugehörigen Dicht- bzw. Anschlagflächen 7, 41 einerseits und 11, 42 andererseits ist eine zum Verbundrohr 31 gerichtete, im Querschnitt jeweils keilförmige Ringnut 43, 44 ausgebildet. Hierdurch werden nicht nur an den einander zugewandten Dicht- bzw. Anschlagflächen 7, 11 die schon aus den vorbeschriebenen Ausführungsformen bekannten Kanten 8, 12 gebildet, sondern zusätzlich auch außenliegende Kanten 45, 46. Anstelle der dargestellten Keilform kann auch beispielsweise eine Keilform mit abgerundeten Kanten vorgesehen sein oder der die Nutform bestimmende Steg kann rechteckig o. dgl. ausgebildet sein.

Ein weiterer Unterschied zu den Ausführungsformen gemäß den Figuren 1 bis 3 und 11 bis 13 besteht darin, daß die Preßbacke 17 jeweils nach außen hin verbreitert ist, so daß deren Außenseiten mit den außenseitigen Dicht- bzw. Anschlagflächen 41, 42 fluchten.

Beim Verpressen graben sich auch hier Dichtsteg 39 und Stützsteg 40 vollständig in das Kunststoffmaterial des Verbundrohrs 31 ein. Die Linien 47, 48 symbolisieren dabei die Grenzen des Materialflusses nach außen und innen. Die Dicht- bzw. Anschlagflächen 41, 42 verhindern ein Fließen von Kunststoffmaterial in den Rohrabschnitt 20 hinein, wenn auf das Verbundrohr 31 Druckkräfte in Richtung auf das Mittelstück 4 der Rohrkupplung 1 einwirken. Auch bei dieser Krafteinwirkung bleibt also die Masse des Rohrabschnitts 20 konstant und sorgt somit für eindeutige Verhältnisse bei der Abdichtung insbesondere auch unter Wärmeeinfluß. Es versteht sich, daß diese Ausbildung auch bei Rohren 2 aus Vollkunststoff anwendbar und sinnvoll ist.

Bei dem Ausführungsbeispiel gemäß den Figuren 15 und 16 weist das Mittelstück 4 der Rohrkupplung 1 eine Konusfläche 49 auf, welche mit der Außenseite der Stützhülse 3 einen stumpfen Winkel einschließt. Am freien Ende ist an das Mittelstück 4 ein axial vorstehender Ringsteg 50 angeformt. Ansonsten weist die Stützhülse 3 auch hier einen Dichtsteg 5 der schon beschriebenen Formgebung aus, dessen Dichtfläche 7 mit der Außenseite der Preßbacke 17 fluchtet. Zudem ist eine Stützrippe 35 zwischen Dichtsteg 5 und Konusfläche 49 vorgesehen.

Zu Beginn des Preßvorgangs wird das Rohr 2 über die Stützhülse 3 bis zur Anlage an der Konusfläche 49 aufgeschoben, wobei der Ringsteg 50 zentrierend auf das Rohr 2 wirkt. Beim Verpressen gleitet das Ende des Rohrs 2 auf der Konusfläche 49 ab und wird hierdurch in axialer Richtung verschoben. Im weiteren Verlauf gräbt sich der Dichtsteg 5 in das Material des Rohrs 2 infolge dessen dortiger Einschnürung ein, wodurch die Axialbewegung des Rohrs 2 unterbunden wird. Durch die weitere verpressung des Endes des Rohrs 2 radial nach innen entsteht jetzt durch die Konusfläche 49 ein Stauchdruck bzw. eine Axialkraft, die von der Dichtfläche 7 des Dichtstegs 5 aufgefangen wird. Unterstützt durch die Stützrippe 35 wölbt sich der Rohrabschnitt 20 bogenförmig nach außen, wobei ein Ausdehnungsfreiraum 22 zu beiden Seiten der Stützrippe 35 gebildet wird. Dieser steht für eine Volumenvergrößerung des Rohrs 2 infolge Erhitzung zur verfügung und stellt die Federwirkung des Rohrabschnitts 20 sicher.

Es versteht sich, daß diese Ausführungsform auch bei Rohren 2 aus weicherem Kunststoffmaterial angewendet werden kann, sofern zusätzliche Preßringe 13, 14, wie bei dem Ausführungsbeispiel nach den Figuren 1 bis 3, eingesetzt werden, die das Rohr 2 in der verpreßten Stellung halten.

Bei den bisherigen Ausführungsformen bildete der Rohrabschnitt 20 die Feder zur Aufprägung einer Axialkraft in Richtung auf den Dichtsteg 5 und dessen Dichtfläche 7. Bei den nachstehenden Ausführungsformen sind besondere Federeinrichtungen vorgesehen, die die Aufprägung der Axialkraft bewirken. Diese Ausführungsformen sind insbesondere für "harte" Rohre geeignet und kommen deshalb vor allem für Verbundrohre oder reine Metallrohre in Frage.

Bei dem Ausführungsbeispiel gemäß den Figuren 17 und 18 hat die Rohrkupplung 1 einen Dichtsteg 5, der in gleicher Weise ausgebildet ist wie bei den vorbeschriebenen Ausführungsformen. Dagegen fehlt ein Stützsteg 9. Hinter dem Ende des Rohrs 2 weist die Stützhülse 3 einen Absatz 51 auf, auf dem eine Federeinrichtung 52 sitzt. Die Federeinrichtung 52 ist als Wellfeder ausgebildet und hat einen V-förmigen Querschnitt mit sich nach außen öffnenden Schenkeln 53, 54, wobei an dem rohrseitigen Schenkel 54 ein Horizontalsteg 55 angeformt ist, der um die Außenkante des Rohrs 2 herumfaßt und an dessen Außenseite anliegt. Die Wellfeder besteht aus einem plastisch verformbaren Metall, z. B. Stahl. Eine Nut 56 auf dem Absatz 51 gibt der Federeinrichtung 52 einen gewissen Halt in axialer Richtung.

Sind Federeinrichtung 52 und Rohr 2 auf die Stützhülse 3 aufgeschoben, wie aus Fig. 17 zu ersehen, wird die Preßbacke 17 für die Einleitung des Preßvorgangs radial nach innen bewegt. Dabei geschieht zweierlei im wesentlichen gleichzeitig. Zum einen wird das Rohr 2 im Bereich des Blockierstegs 5 unter plastischer Verformung durch den Preßsteg 19 eingeschnürt, wobei sich der Dichtsteg 5 in das Material des Rohrs 2 eingräbt und dort eine Art formschlüssiges Widerlager gegen Materialfluß zur Fluidseite hin bildet. Der linksseitige Preßsteg 18 fährt zwischen die Schenkel 53, 54 ein und weitet sie auf. Da sich die Federeinrichtung 52 mit dem linksseitigen Schenkel 53 an dem Mittelstück 4 abstützt, wird auf den Rohrabschnitt 20 durch den Schenkel 54 eine Axialkraft in Richtung des Pfeils A und damit in Richtung auf die Dichtfläche 7 des Dichtstegs 5 ausgeübt und sorgt dort für eine dichtende Anlage. Dabei wird die Federeinrichtung 52 plastisch aufgeweitet, behält dabei aber ihre Federeigenschaft bei, d. h. auch nach der Verpressung und damit dem Erreichen des Zustandes gemäß Fig. 18 wird auf den Rohrabschnitt 20 des Rohrs 2 ein Axialdruck in Richtung des Pfeils A ausgeübt. Bei einer Erwärmung des Rohrs 2 wird die Längenänderung des Rohrabschnitts 20 durch die federnde Nachgiebigkeit der Federeinrichtung 52 aufgefangen. Der Anpreßdruck an der Dichtfläche 7 des Dichtstegs 5 und damit dessen Dichtwirkung bleiben auch dann erhalten.

Die Ausführungsform gemäß Fig. 19 unterscheidet sich von der gemäß den Figuren 17 und 18 lediglich durch eine andere Ausbildung der Federeinrichtung 52 zur Aufprägung der Axialkraft. Sie weist hier einen Elastomerring 58 auf, der an der Stirnseite des Rohrs 2 anliegt. Er ist von einem Metallring 59 umgeben, der einen zum Mittelstück 4 schräg abfallenden Schenkel 60 und einen an der Außenseite des Rohrs 2 anliegenden Axialschenkel 61 aufweist. Bei der Verpressung und damit Radialbewegung der Preßbacke 17 nach unten entsteht ein axialer Stauchdruck auf den Rohrabschnitt 20 dadurch, daß der linksseitige Preßsteg 18 den schrägen Schenkel 60 beaufschlagt und somit den Elastomerring 58 in Richtung des Pfeils A bewegt, so daß er über die Stirnfläche des Rohrs 2 einen Stauchdruck, d. h. eine Axialkraft auf die Dichtfläche 7 ausübt. Sie wird in derselben Weise, wie zu Fig. 17 und 18 beschrieben, durch den Dichtsteg 5 aufgefangen.

In beiden Fällen kann der rechtsseitige Preßsteg 19 auch so ausgebildet sein, daß er radial weiter nach innen ragt als der linksseitige Preßsteg 18, so daß ein Formschluß mit dem Dichtsteg 15 zeitlich vor Beaufschlagung des Federrings 52 bzw. 57 erfolgt. Auf diese Weise wird eine vorzeitige axiale Verschiebung des Rohrs 2 vermieden.

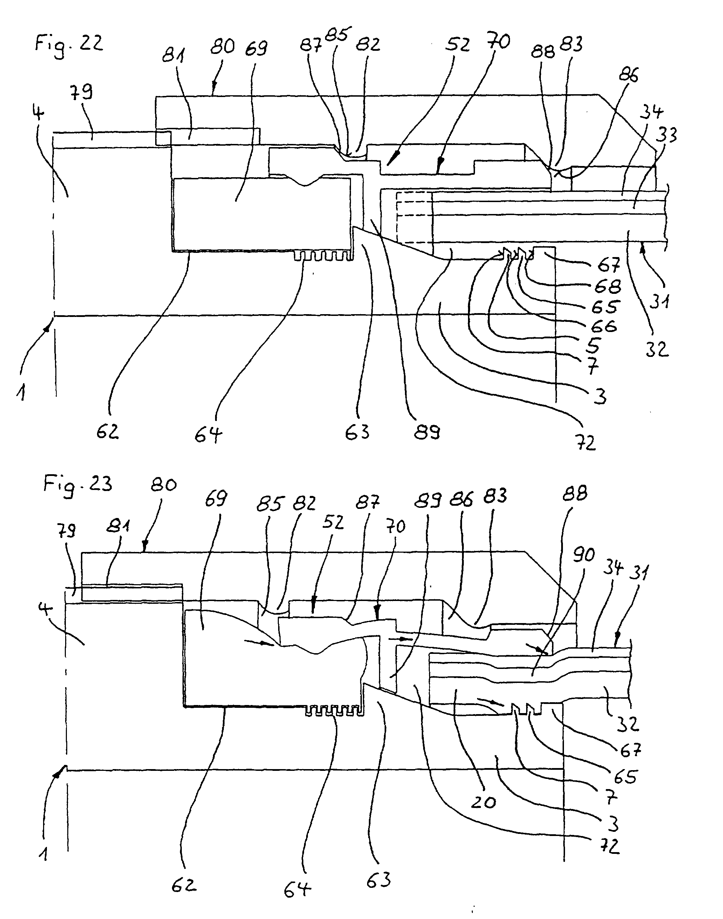

Bei der Ausführungsform gemäß den Figuren 20 und 21 weist die Rohrkupplung 1 eine Stützhülse 3 auf, welche an ihrem Umfang eine breite Ringnut 62 zwischen Mittelstück 4 und einem keilförmigen Ringsteg 63 aufweist. Die einander zugewandten Seiten von Mittelstück 4 und Ringsteg 63 verlaufen parallel zueinander und senkrecht zur Rohrachse. In dem dem Ringsteg 63 benachbarten Bereich weist der Boden der Ringnut 62 eine Art Verzahnung 64, gebildet von insgesamt fünf kleinen Ringnuten, auf.

Zum freien Ende hin hat die Stützhülse 3 neben dem ersten Dichtsteg 5 mit zum Mittelstück 4 gerichteter Dichtfläche 7 einen zweiten Dichtsteg 65 mit ebenfalls zum Mittelsteg 4 gerichteter Dichtfläche 66. Beide Dichtstege 5, 65 sind wie die Dichtstege 5 in den vorangegangenen Ausführungsformen und damit identisch ausgebildet. Am Ende der Stützhülse 3 ist ein weiterer, im Querschnitt rechteckiger Dichtsteg 67 mit Dichtfläche 68 ausgebildet.

Die Rohrkupplung 1 weist eine Federeinrichtung 52 auf, die im wesentlichen aus zwei Teilen besteht, und zwar aus einem Federring 69 und einer Preßhülse 70. Der Federring 69 besteht aus einem elastisch verformbaren, thermoplastischen Kunststoffmaterial und hat in seiner Ausgangsform rechteckigen Querschnitt. Er füllt die Ringnut 62 im wesentlichen vollständig aus und ist durch Überschieben über den schräg ansteigenden Teil des Ringstegs 63 in die Ringnut 62 unter elastischer Aufweitung eingebracht worden.

Die Preßhülse 70 umgibt den Federring 69 nur teilweise und erstreckt sich bis zum Bereich der Dichtstege 65, 67. Mittels über den Umfang verteilten Einprägungen 71 ist sie formschlüssig mit dem Federring 69 verbunden. Rohrkupplung 1 und Federeinrichtung 52 bilden damit eine vormontierte Einheit. Dabei wird zwischen Preßhülse 70 und Stützhülse 3 ein Ringraum 72 gebildet, in den ein Rohr - in diesem Fall ein Verbundrohr 31 - eingeschoben werden kann, und zwar bis zu dem von dem Ringsteg 63 gebildeten Anschlag (gestrichelt gezeichnet). Ein Einschieben des Verbundrohrs 31 bis zu der durchgezogenen Stellung ist jedoch ausreichend für die Funktion der Verbindung. Beim Einschieben wirkt die Preßhülse 70 zentrierend auf das Verbundrohr 31.

Oberhalb der Preßhülse 70 befindet sich eine der Preßbacken 17. Sie weist hier nicht nur die beiden außenliegenden Preßstege 18, 19 auf, sondern jeweils im Abstand nach innen versetzt zwei weitere Preßstege 73, 74 auf. Die Preßhülse 70 hat an beiden Enden radial nach außen vorstehende Randstege 75, 75, die der Ausrichtung der Preßbacke 17 dienen, indem sie die äußeren Preßstege 18, 19 beim Verpressen führen und einfassen. Damit ist sichergestellt, daß der Preßdruck an dem vorgesehenen Stellen ausgeübt wird. Es versteht sich, daß auch andere Eingriffsmöglichkeiten vorgesehen sein können, um die Preßbacke 17 und damit das zugehörige Preßgerät gegenüber der Preßhülse 70 auszurichten.

Nach Einschieben des Verbundrohrs 31 kann der Preßvorgang durch radiale Bewegung der Preßbacken 17 eingeleitet werden. Dabei werden der Federring 69 und das Verbundrohr 31 verpreßt, wobei sie im Endpreßzustand die in Figur 21 dargestellten Formgebungen erhalten. Der von der Preßhülse 70 beaufschlagte Teil des Federrings 69 wird radial verpreßt, wobei auch ein Formschluß mit der Verzahnung 64 entsteht. Das Material des Federrings 69 dehnt sich einerseits axial über den Ringsteg 63 in Richtung auf das Verbundrohr 61 aus, andererseits in dem Abschnitt zwischen Preßhülse 70 und Mittelstück 4 radial nach außen. Die hier gegebene freie Ausdehnungsmöglichkeit ist wesentlich, um dem Federring 69 eine Volumenzunahme infolge Temperaturerhöhung zu ermöglichen.

Gleichzeitig wird das Verbundrohr 31 radial nach innen verpreßt, wobei sich die Dichtstege 5, 65, 67 in die Kunststoffschicht 32 des Verbundrohrs 31 eingraben. Dabei werden in die Preßhülse 70 mittels der Preßstege 19, 74 zwei beabstandete Einschnürungen 77, 78 eingeformt, die entsprechende Einprägungen im Verbundrohr 31 bis hin zum Aluminiumrohr 33 bewirken, so daß zwischen Preßhülse 70 und Verbundrohr 31 eine reib- und formschlüssige Verbindung entsteht, welche aufgrund der Verformung des Aluminiumrohrs 33 auch bei hohen Temperaturen erhalten bleibt.

Nach Abnahme der Preßbacke 17 wird aufgrund der elastischen Eigenschaften des Federrings 69 und dessen Komprimierung eine in Richtung auf das Verbundrohr 31 gerichtete Axialkraft auf die Preßhülse 70 aufgeprägt, symbolisiert durch die eingezeichneten Pfeile. Über die Einschnürungen 77, 78 wird diese auf das Verbundrohr 31 übertragen. Diese Axialkraft bewirkt, daß das Material der Kunststoffschicht 32 gegen die Dichtflächen 7, 66, 68 der Dichtstege 5, 65, 67 gedrückt wird und hierdurch eine zuverlässige Dreifachabdichtung erzielt wird.

Es versteht sich, daß die Komprimierung des Federrings 69 so durchgeführt und die elastischen Eigenschaften so ausgebildet sind, daß auch bei maximalen Betriebsbedingungen insbesondere hinsichtlich der Temperatur und der vorgesehenen Lebensdauer ausreichend Federhub und Federkraft zur Verfügung steht, um die Dichtflächen 7, 66, 68 zu belasten und damit die Dichtheit sicherzustellen. Dabei sollte das Material des Federrings 69 das gleiche sein wie das Material der Kunststoffschicht 32, so daß das Temperaturverhalten gleich ist. Die Darstellung zeigt im übrigen, daß auch dann eine dichte Verbindung hergestellt wird, wenn das Verbundrohr 31 nicht bis zum Ringsteg 63 eingeführt oder wenn es nicht genau senkrecht abgeschnitten worden ist.

Die vorstehend beschriebene Ausbildung der Rohrkupplung 1 vermeidet im übrigen einen Kontakt des Aluminiumrohrs 33 mit Teilen der Rohrkupplung 1, welche bis auf den Federring 69 aus Metall besteht. Auf diese Weise wird eine intermetallische Korrosion vermieden, ohne daß es hierfür zusätzlicher Teile bedarf. Davon abgesehen bietet die äußere Mantelfläche des Federrings 69 zwischen Mittelstück 4 und Preßhülse 70 eine einfache Möglichkeit, Identifikationszeichen anzubringen, beispielsweise zur Kennzeichnung der Größe der Rohrkupplung, zur Identifikation des Herstellers oder zur Kenntlichmachung der Zulassung, da das Kunststoffmaterial des Federrings 69 einfach zu beschriften ist, beispielsweise mit demselben Verfahren, mit dem auch das Verbundrohr 31 selbst beschriftet wird. Durch entsprechende Farbgebung des Materials des Federrings 69 kann ein kontrastreicher Schreibgrund bereitgestellt werden. Es versteht sich, daß dies Kosten einspart im Vergleich zu Prägungen oder Garvierungen in Metall.

Zudem eröffnet das Material des Federrings 69 die Möglichkeit, mit Hilfe der Preßbacke 17 eine Einprägung in dem äußeren Mantel des Federrings 69 vorzunehmen, ohne daß dies mit einer wesentlichen Erhöhung der Preßkraft verbunden ist. Dabei können auch sehr feine und eng aneinanderliegende Zeichen eingeprägt werden. Da das Material des Federrings 69 zwischen Mittelstück 4 und Preßhülse 70 eingezwängt ist, kann es dabei nicht wegfließen. Auf diese Weise kann später festgestellt werden, mit welchem Preßwerkzeug die Verpressung stattgefunden hat, d. h. es läßt sich beweisen, wenn die Verpressung mit einem nicht passenden Preßgerät oder einem Fremdfabrikat durchgeführt worden ist.

Die Rohrkupplung 1 gemäß den Figuren 20 und 21 läßt sich auch für Rohre 2 aus Metall verwenden. Um auch insoweit eine möglichst optimale Abdichtung zu gewährleisten, kann es in diesem Fall zweckmäßig sein, den Dichtsteg 65 wegzulassen und in die so gebildete Ringnut zwischen Dichtsteg 5 und Dichtsteg 67 einen O-Ring aus elastomerem Material oder Kunststoff als Dichtungsring einzulegen, der etwas über die beiden äußeren Begrenzungen der Dichtstege 5, 67 vorsteht.

Die Figuren 22 und 23 zeigen eine Rohrkupplung 1, die gegenüber der Rohrkupplung 1 gemäß den Figuren 20 und 21 nicht prinzipiell, sondern nur bezüglich der nachstehenden Details abgewandelt ist, so daß im übrigen auf die Beschreibung zu den Figuren 20 und 21 Bezug genommen wird.

Das Mittelstück 4 ist in axialer Richtung verbreitert und weist außenseitig ein Gewinde 79 auf. Darauf aufgeschraubt ist eine Preßmutter 80, welche den Federring 69 und die Preßhülse 70 umgibt. Hierzu weist die Preßmutter 80 innenseitig ein zu dem Gewinde 79 passendes Gewinde 81 auf.

An der Innenfläche weist die Preßmutter 80 zwei radial nach innen vorspringende, ringförmige Preßstege 32, 33 auf, die zum Mittelstück 4 hin gerichtete Konusflächen 85, 86 aufweisen. Diese Konusflächen 85, 86 korrespondieren mit ihnen in der Anfangsstellung gegenüberliegenden Anlaufschrägen 87, 88 an der Außenseite der Preßhülse 70. Zusätzlich weist die Preßhülse 70 einen radial nach innen gehenden Stützsteg 89 auf, der in der Ausgangsstellung (Figur 22) an der schräg ansteigenden Fläche des Ringstegs 63 anliegt und damit eine Bewegung der Preßhülse 70 in Richtung auf das Mittelstück 4 blockiert.

Nach Einschieben des Verbundrohres 31 geschieht die Verpressung der Preßhülse 70 und damit des Federrings 69 und des Verbundrohres 61 dadurch, daß die Preßmutter 80 so verdreht wird, daß sie sich auf das Gewinde 79 aufschraubt und hierdurch axial in Richtung auf das Mittelstück 4 verschoben wird. Die Preßstege 82, 83 verpressen dabei Abschnitte der Preßhülse 70 radial nach innen, indem sie über die Konusflächen 85, 86 auf deren Anlaufschrägen 87, 88 auffahren. Dies führt einerseits zur Komprimierung des Federrings 69 in etwa der gleichen Weise wie bei dem Ausführungsbeispiel gemäß den Figuren 20 und 21 und andererseits zur Radialverpressung des Verbundrohrs 31, wobei in diesem Fall nur eine einzige Einschnürung 90 im Verbundrohr 31 bis hin zu dem Aluminiumrohr 33 erzeugt wird. Die Wirkung ist im wesentlichen die gleiche wie bei dem Ausführungsbeispiel gemäß den Figuren 20 und 21, d. h. über den komprimierten Federring 69 wird eine Axialkraft auf die Preßhülse 70 aufgeprägt, und diese wiederum überträgt die Axialkraft auf das Verbundrohr 31 mit der Folge, daß die Dichtflächen 7, 66, 68 belastet werden (vgl. Pfeile in Figur 23).

Die besondere Konstruktion der Rohrkupplung 1 gemäß den Figuren 22 und 23 eignet sich insbesondere für abmontierbare Geräte, beispielsweise Hähne oder Thermostate. Ein spezielles Preßgerät ist hier nicht erforderlich. Sofern die Preßmutter 80 eine Sechskantausbildung aufweist, reicht ein Schraubenschlüssel aus, um die Verdrehung der Preßmutter 80 und damit die Verpressung zu bewirken.

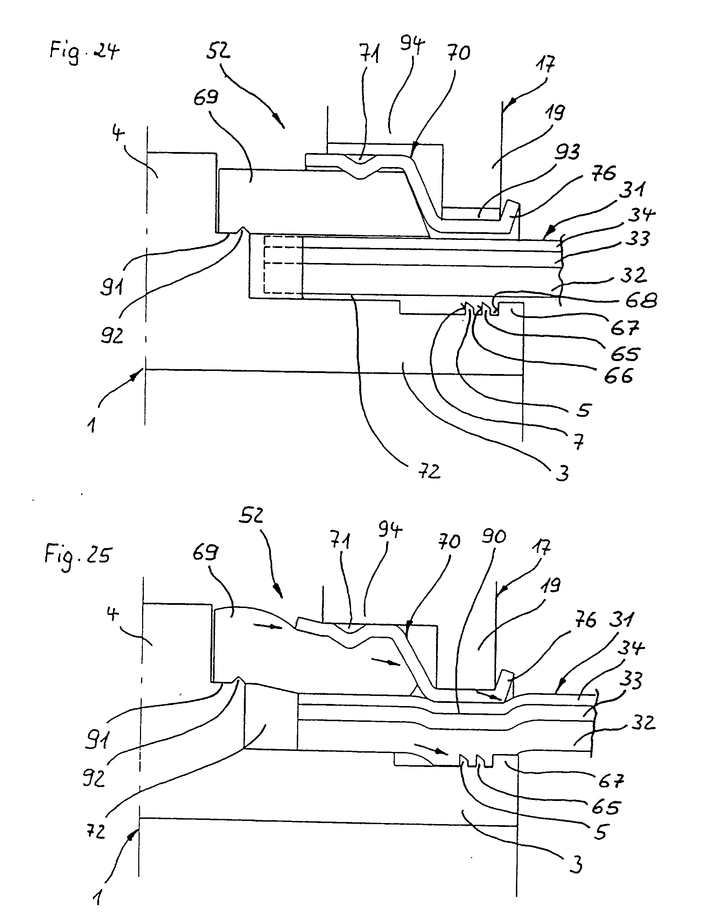

In den Figuren 24 und 25 hat die Rohrkupplung 1 ebenfalls eine Federeinrichtung 52, die aus einem Federring 69 aus einem elastischen Kunststoffmaterial und einer Preßhülse 70 besteht. Der Federring 69 ist auf einen stufenförmigen Absatz aufgeschoben, der einen im Querschnitt dreiecksförmigen Ringsteg 92 aufweist, welcher in die Unterseite des Federrings 69 einfaßt und diesen in der in Figur 24 gezeigten Position hält. Zum freien Ende der Rohrkupplung 1 ist der Federring 69 abgeschrägt.

Die Preßhülse 70 übergreift den Federring 69 teilweise und ist mit ihm über Einprägungen 71 verbunden. Zum freien Ende hin verläuft die Preßhülse 70 radial schräg nach innen und bildet dort zusammen mit einem Randsteg 76 eine breite Ringnut 93 aus.

Zwischen Federring 69 und Preßhülse 70 einerseits sowie der Stützhülse 3 andererseits ist ein Ringraum 72 freigelassen, in den ein Verbundrohr 31 eingeschoben ist, allerdings nicht bis zur Anlage am Mittelstück 4, sondern mit Abstand zu diesem, der entsprechend der gestrichelten Darstellung geringer oder entsprechend der durchgezogenen Darstellung größer sein kann. Zur Vermeidung der Anlage kann ein Stopper in Form eines Vorsprungs oder dergleichen vorgesehen sein.

Das Verpressen wird mit Hilfe von Preßbacken 17 durchgeführt, der rechtsseitig einen vorspringenden Preßsteg 19 aufweisen und linksseitig einen Preßring 94. Der Preßsteg 19 ist so dimensioniert, daß er gerade in die Ringnut 93 paßt, so daß die Preßbacken 17 an dieser Ringnut 93 ausgerichtet werden können. Durch radiale Bewegung der Preßbacken 17 wird das Verbundrohr 31 gegen die Stützhülse 3 verpreßt, wobei sich die Dichtstege 5, 65, 67 in die innere Kunststoffschicht 32 eingraben. Gleichzeitig wird der Federring 69 in ähnlicher Weise wie bei den Ausführungsbeispielen gemäß den Figuren 20 bis 23 teilweise komprimiert und legt sich dabei an die Außenseite des Verbundrohres 1 an. Durch die Kompression wird auf die Preßhülse 70 eine Axialkraftkomponente aufgeprägt (vgl. Pfeile in Figur 25), die von dieser auf das Verbundrohr 31 übertragen wird, da der an dem Verbundrohr 31 anliegende Teil der Preßhülse 70 aufgrund der Verpressung eine Einschnürung 90 in dem Verbundrohr 31 erzeugt hat, die für einen gewissen Formschluß sorgt. Teilweise wird aber die Axialkraft auch aufgrund des Reibschlusses zwischen Federring 69 und Verbundrohr 31 übertragen. Die Rohrkupplung gemäß den Figuren 24 und 25 zeichnet sich gegenüber den vorbeschriebenen Ausführungsbeispielen durch axial kurze Bauweise aus.

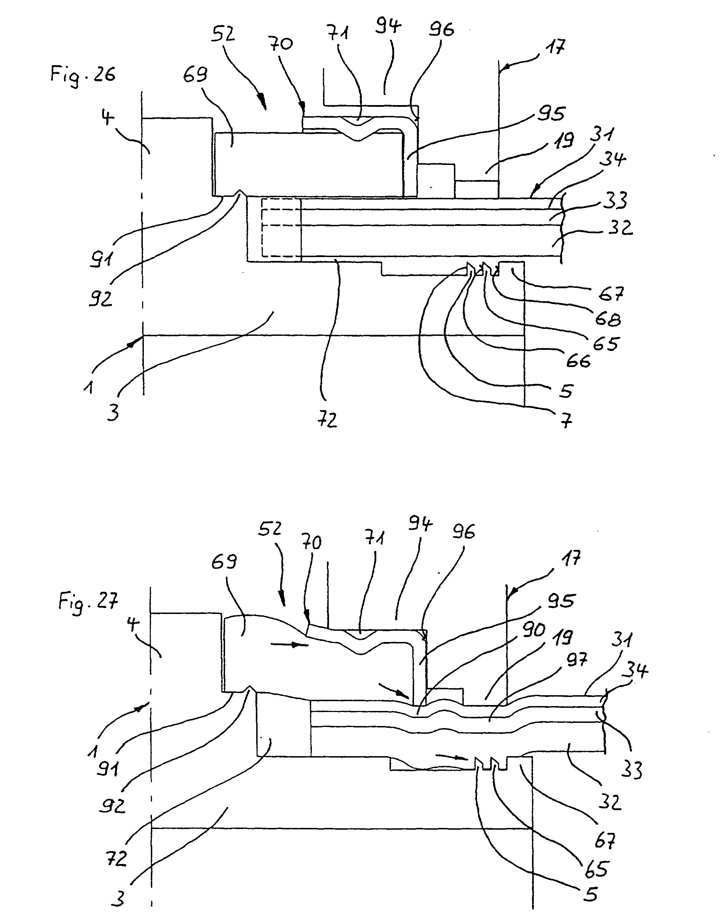

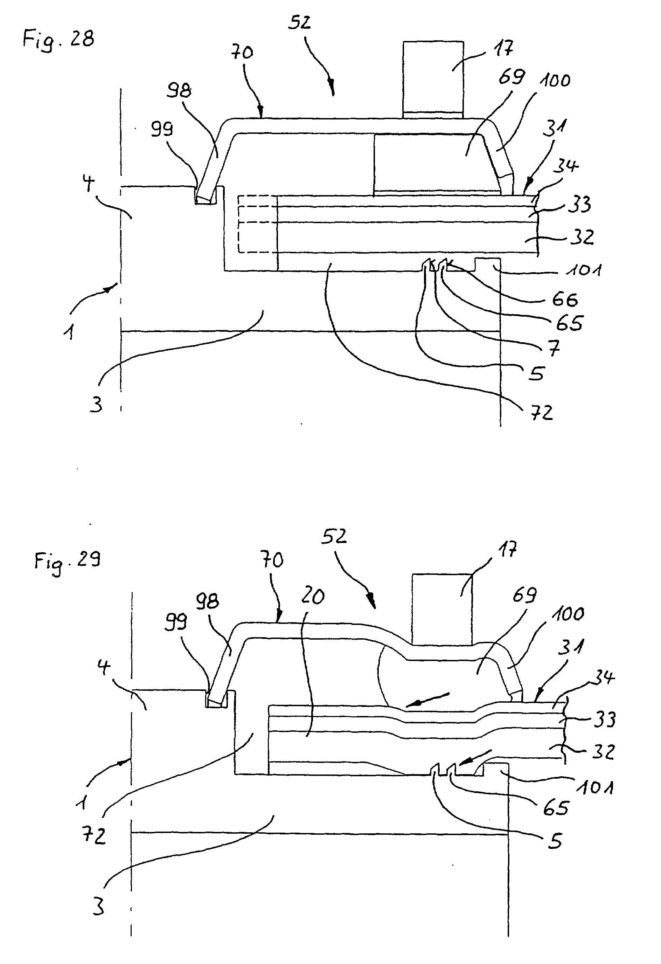

Das in den Figuren 26 und 27 dargestellte Ausführungsbeispiel unterscheidet sich von dem gemäß den Figuren 24 und 25 im wesentlichen dadurch, daß der Federring 69 hier wieder rechteckigen Querschnitt hat und daß die Preßhülse 70 in dem über den Federring 69 gehenden Abschnitt einen radial nach innen gerichteten Preßsteg 95 aufweist, welcher bündig mit der Unterseite des Federrings 69 abschließt. Die Preßbacke 17 ist gegenüber der in den Figuren 24 und 25 gezeigten lediglich dadurch angepaßt, daß eine Führungsfläche 96 für den Preßsteg 95 ausgebildet ist.

Beim Verpressen geschieht im wesentlichen dasselbe wie bei dem Ausführungsbeispiel gemäß den Figuren 24 und 25, d. h. das Verbundrohr 31 wird gegen die Stützhülse 3 unter eingraben der Dichtstege 5, 65, 67 gepreßt, der Federring 69 wird komprimiert und der Preßsteg 65 gräbt sich ein wenig in das Verbundrohr 31 unter Ausbildung einer Einschnürung 90 ein. Im Unterschied zu den vorbeschriebenen Ausführungsformen wird hier eine zweite Einschnürung 97 auf Höhe der Dichtstege 5, 65, 67 durch den Preßsteg 19 direkt ausgebildet. Die Preßhülse 70 dient hier also allein der Axialkraftübertragung von dem Federring 69 auf das Verbundrohr 31. Die plastische Verformung insbesondere des Aluminiumrohrs 33 im Verbundrohr 31 hält die Formgebung der Einschnürung 97 auch nach Abnahme der Preßbacke 17 aufrecht.

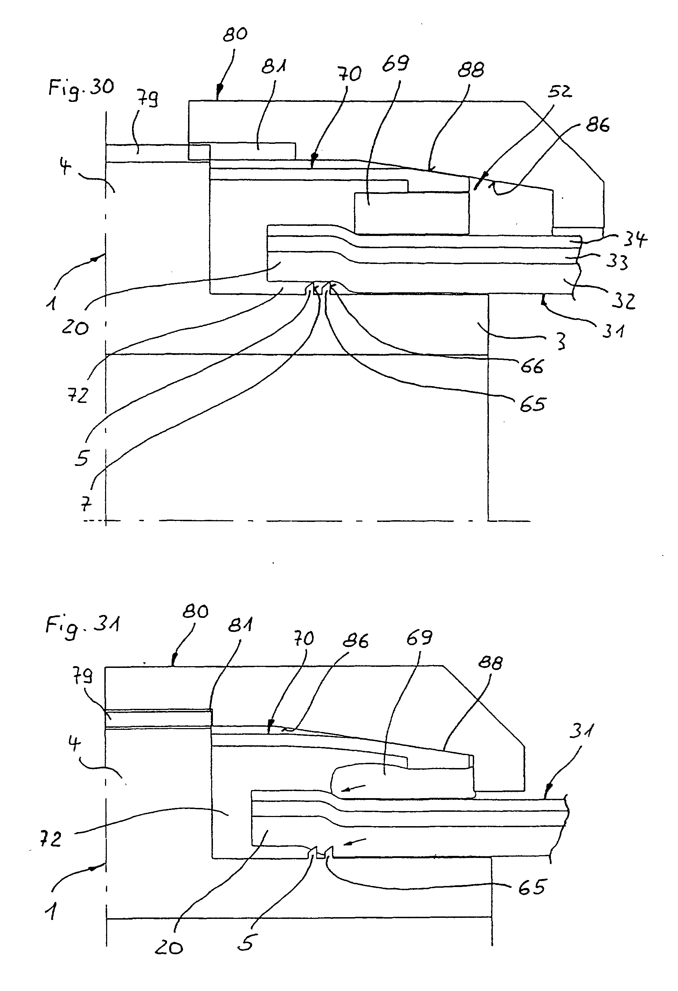

Bei dem Ausführungsbeispiel gemäß den Figuren 28 und 29 findet eine Federeinrichtung 52 Anwendung, mit der auf das Verbundrohr 31 eine Axialkraft in umgekehrter Richtung, d. h. in Richtung auf das Mittelstück 4 der Rohrkupplung 1 aufgeprägt wird. Die Federeinrichtung 52 besteht hier ebenfalls aus einem Federring 69 aus einem elastischen Kunststoffmaterial und einer den Federring 69 außenseitig einfassenden Preßhülse 70. Die Preßhülse 70 weist zum Mittelstück 4 hin einen radial schräg nach innen gerichteten Randsteg 98 auf, der formschlüssig in eine Ringnut 99 einfaßt, wodurch die Preßhülse 70 in axialer Richtung festgelegt wird. Auf der freien Seite befindet sich ebenfalls ein radial schräg nach innen gerichteter Randsteg 100, der mit seiner Innenseite den Federring 69 einfaßt und führt. Gleichzeitig dient der Federring 69 der Zentrierung beim Einschieben des Verbundrohres 31.

Für die Abdichtung sind lediglich zwei Dichtstege 5, 65 vorgesehen, die hier jedoch umgekehrt ausgerichtet sind, so daß deren Dichtflächen 7, 66 zum freien Ende der Stützhülse 3 hin gerichtet sind. Zusätzlich ist ein Ringsteg 101 vorgesehen, der hier jedoch keine Dichtfunktion hat.

Als Preßwerkzeug 17 dient ein einfacher Preßring, der für den Verpreßvorgang in etwa mittig zu dem Federring 69 und damit auch auf Höhe der Dichtstege 5, 65 angesetzt wird. Beim Verpressen wird das Verbundrohr im Bereich der Dichtstege 5, 65 eingeschnürt, so daß sich die Dichtstege 5, 65 in die innere Kunststoffschicht 32 eingraben. Gleichzeitig wird der Federring 69 komprimiert. Da er nur in Richtung auf das Mittelstück 4 ausweichen kann, entsteht über den Reibschluß und auch zusätzlich über den Formschluß durch die Einschnürung eine in Richtung auf das Mittelstück 4 gerichtete, durch die Pfeile symbolisierte Kraft, welche auf das Verbundrohr 31 eine Axialkraft aufprägt, so daß die Dichtflächen 7, 66 druckbelastet werden.

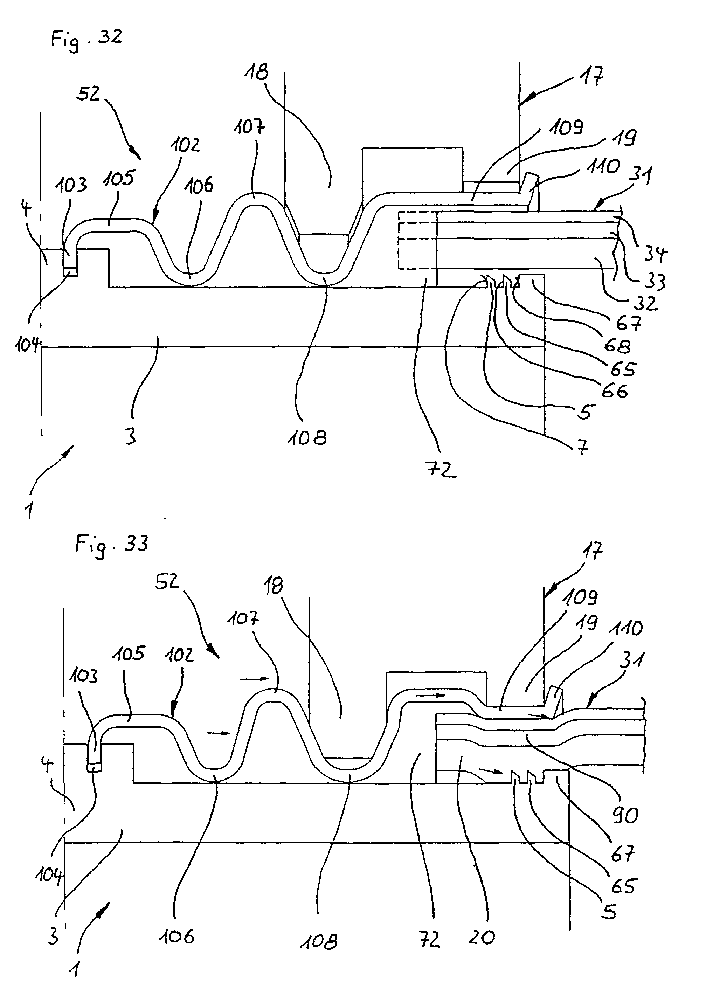

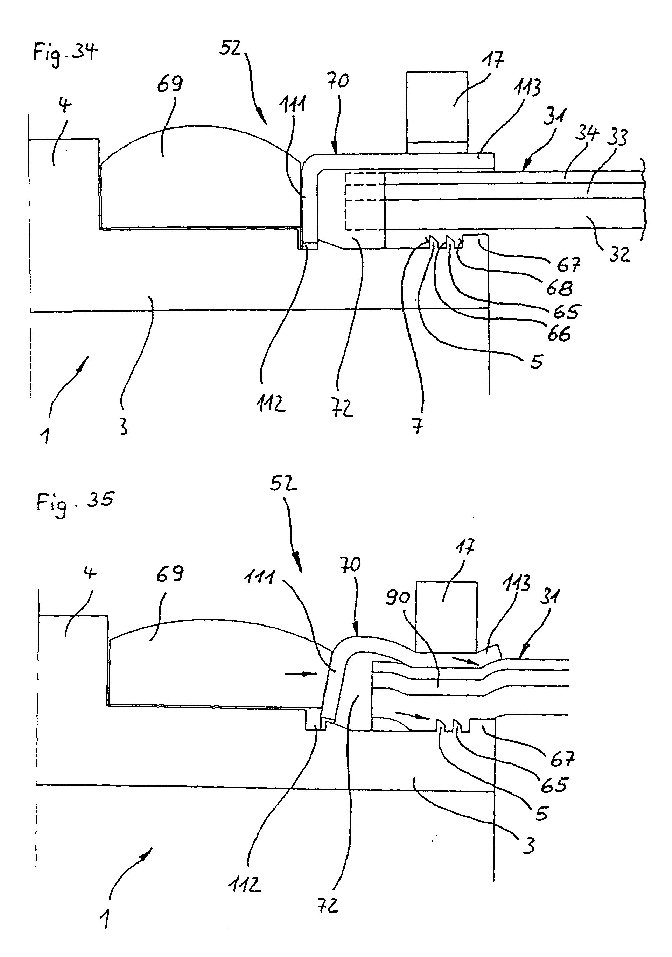

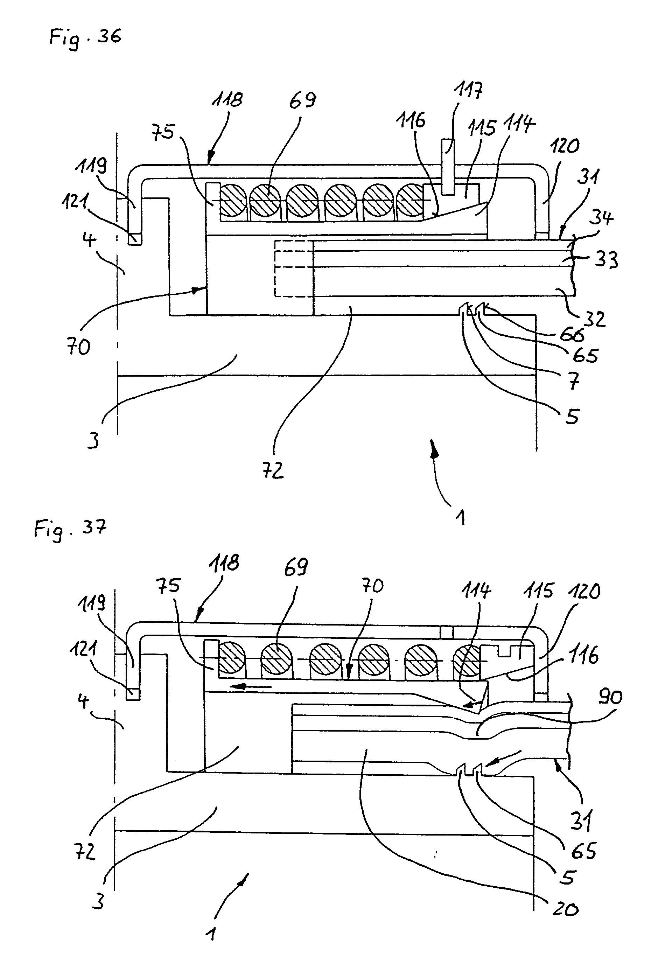

Das in den Figuren 30 und 31 dargestellte Ausführungsbeispiel stellt prinzipiell eine Kombination der beiden Ausführungsbeispiele gemäß den Figuren 22 und 23 sowie 28 und 29 dar. Das Mittelstück 4 der Rohrkupplung 4 weist ein Gewinde 79 auf, auf das eine Preßmutter 80 mit ihrem Gewinde 81 aufgeschraubt ist. Die Preßmutter 80 umgibt eine Preßhülse 70, die sich an dem Mittelstück 4 abstützt und zum freien Ende hin einen Federring 69 einfaßt. Hierdurch wird ein Ringraum 72 zwischen Federring 69 und Stützhülse 3 gebildet, in die ein Verbundrohr 31 eingeschoben ist. Allerdings ist ein endseitiger Rohrabschnitt 20 zuvor aufgeweitet worden, so daß er über die Dichtstege 5, 65 geschoben werden kann. Die Ausrichtung dieser Dichtstege 5, 65 ist die gleiche wie bei dem Ausführungsbeispiel gemäß den Figuren 28 und 29.

Die Preßmutter 80 hat innenseitig eine Konusfläche 86, die mit einer entsprechenden Auflaufschräge 88 an der Außenseite der Preßhülse 70 korrespondiert und an dieser auch anliegt. Wird die Preßmutter 80 in einer Richtung verdreht, in der sie sich auf das Gewinde 79 aufschraubt, bewegt sie sich gleichzeitig axial in Richtung auf das Mittelstück 4. Dabei bewirkt die Konusfläche 86, daß die Preßhülse 70 im Bereich ihrer Auflaufschräge 88 radial nach innen verpreßt wird. Dies wiederum bewirkt eine Komprimierung des Federrings 69 mit zweierlei Folgen. Zum einen graben sich die Dichtstege 5, 65 in die Kunststoffschicht 32 ein. Zum anderen entsteht ein in Richtung auf das Mittelstück 4 gehende Axialkraft, die auf das Verbundrohr 31 übertragen wird und so für die Druckbeaufschlagung der Dichtflächen 7, 66 sorgt.

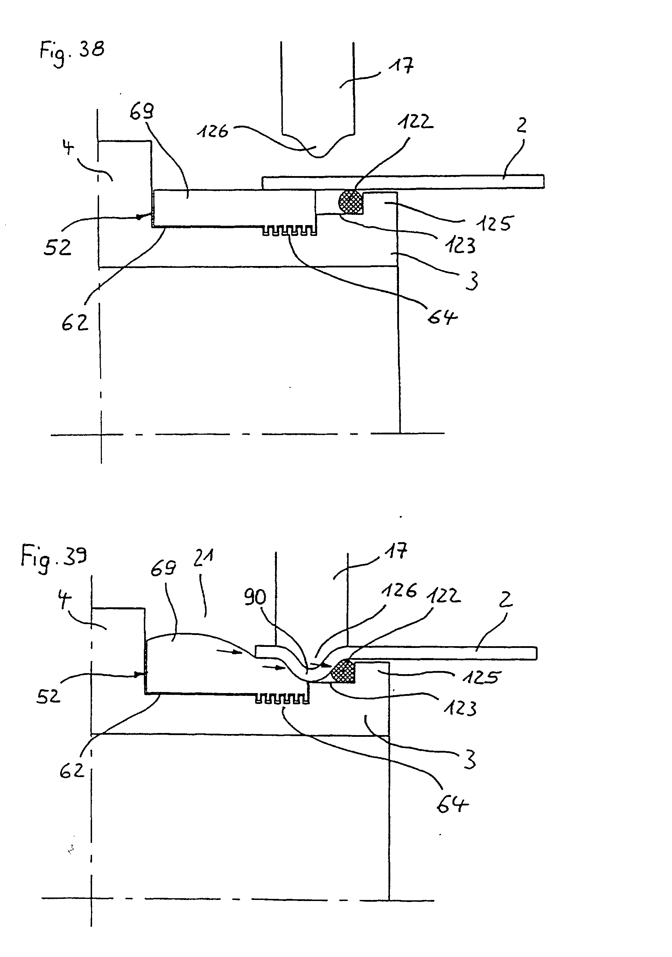

Bei dem Ausführungsbeispiel gemäß den Figuren 32 und 33 wird die Federeinrichtung 52 von einem Wellfederrohr 102 gebildet, die die Stützhülse 3 umgibt. Sie hat einen radial nach innen gerichteten Randsteg 103, der in eine Ringnut 104 im Mittelstück 4 einfaßt. Zum freien Ende hin folgen nach einem geraden Abschnitt 105 ein Wellental 106, ein Wellenberg 107 und wiederum ein Wellental 108. Im Anschluß an dieses Wellental 108 geht das Wellfederrohr 102 wiederum in einen geraden Abschnitt 109 über, der mit der Stützhülse 3 einen Ringraum 72 für das Verbundrohr 31 einfaßt. Das Wellfederrohr 102 endet in einem nach außen gerichten Randsteg 110. Die Stützhülse 3 trägt wiederum drei Dichtstege 5, 65, 67 mit zum Mittelstück 4 gerichteten Dichtflächen 7, 66, 68.

Für den Verpreßvorgang wird das Verbundrohr nicht vollständig in den Ringraum 72 eingeschoben. Anschließend erfolgt die Verpressung mit den Preßbacken 17, die zwei beabstandete Preßstege 18, 19 aufweisen. Der rechtsseitige Preßsteg 19 beaufschlagt den geraden Abschnitt 109 des Wellfederrohrs 102, wobei der Randsteg 110 eine Ausrichthilfe bildet. Der gerade Abschnitt 109 wird eingeschnürt und verpreßt dabei das Verbundrohr 31 derart, daß die Dichtstege 5, 65, 67 in die Kunststoffschicht 32 einfassen. Dabei wird das Aluminiumrohr 33 plastisch verformt, erhält also eine Einschnürung 90.

Gleichzeitig fährt der linksseitige Preßsteg 18 in das Wellental 108 ein und biegt dessen Schenkel auseinander. Dies kann gleichzeitig mit der Verpressung des Verbundrohres 31 geschehen oder etwas verzögert. Beim Auseinanderbiegen der Schenkel des Wellentals 108 wird das Wellfederrohr 102 plastisch verformt. Hierdurch entsteht eine axiale Federkraft in Richtung auf das freie Ende der Stützhülse 3, die über den verpreßten Bereich des geraden Abschnitts 109 aufgrund des dort vorhandenen Reib- und Formschlusses auf das Verbundrohr 31 übertragen wird. Dies wiederum sorgt für eine entsprechende Druckbeaufschlagung auf den Dichtflächen 7, 66, 68.

Es versteht sich, daß statt des Wellfederrohrs 102 auch andere Federformen in Frage kommen, wie beispielsweise Wellscheiben, Federscheiben oder dergleichen.

Bei den in den Figuren 34 bis 37 dargestellten Ausführungsbeispielen sind die Federeinrichtungen 52 so ausgebildet, daß die Feder schon bei der Montage vorgespannt, d. h. komprimiert worden ist. Das Ausführungsbeispiel gemäß den Figuren 34 und 35 hat hierzu einen Federring 69 aus elastischem Kunststoffmaterial, der die Stützhülse 3 umgibt und der axial komprimiert ist, so daß er sich aus seiner rechteckigen Grundform außenseitig wölbt. Axial wird er einerseits von dem Mittelstück 4 und andererseits von einer Preßhülse 70 eingefaßt, und zwar von dessen Radialschenkel 111, der im Ausgangszustand (Figur 34) in eine Ringnut 112 in der Stützhülse 3 einfaßt. An den Radialschenkel 111 schließt sich ein Axialabschnitt 113 an, der mit der Stützhülse 3 einen Ringraum 72 für das Einschieben des Verbundrohres 31 einschließt. Das Verbundrohr 31 wird nicht vollständig in diesen Ringraum 72 eingeführt, wobei in Figur 34 eine Normalstellung durchgezogen und eine ebenfalls noch in Frage kommende Stellung gestrichelt dargestellt ist.

Für den Preßvorgang werden einfache, ringförmige Preßbacken 17 angesetzt, und zwar auf Höhe der Dichtstege 5, 65, 67. Beim radialen Zusammenführen der Preßbacken 17 werden sowohl die Preßhülse 70 als auch das Verbundrohr 31 eingeschnürt, wobei sich die Dichtstege 5, 65, 67 in die Kunststoffschicht 32 des Verbundrohres 31 eingraben und eine bleibende Einschnürung 90 im Verbundrohr und auch in dem Axialabschnitt 113 der Preßhülse 70 entsteht.

Durch die Verpressung des Axialabschnitts 113 kippt der Radialschenkel 111 aus der Ringnut 112 heraus, so daß in seiner axialen Beweglichkeit nicht mehr gehindert ist. Dabei kann die von dem Federring 69 auf den Radialschenkel 111 ausgeübte Druckkraft über den Axialabschnitt 113 auf das Verbundrohr 31 übertragen werden. Dies wiederum hat zur Folge, daß die Dichtflächen 7, 66, 68 belastet werden.

Die vorbeschriebene Ausführungsform zeichnet sich dadurch aus, daß die aufzuwendende Preßkraft geringer gehalten werden und damit auch das Preßwerkzeug schmaler ausgelegt werden kann, da der Federring 69 und der ansonsten diesen überlappenden Teil der Preßhülse 70 nicht mitverpreßt werden.

Es versteht sich, daß statt des Federrings 69 aus elastischem Kunststoffmaterial auch jede andere Federart in Frage kommt, mit der eine Druckkraft auf den Radialschenkel 111 ausgeübt werden kann, beispielsweise Schraubenfedern, Tellerfedern, Gummifedern etc. Die Figuren 36 und 37 zeigen eine spezielle Ausführungsform einer Federeinrichtung 52 unter Verwendung einer Schraubenfeder als Federring 69.

Bei dieser Ausführungsform umgibt die Schraubenfeder 69 eine Preßhülse 70, die linksseitig einen radial nach außen vorstehenden Randsteg 75 und rechtsseitig einen nach außen hochgehenden Konus 114 aufweist. Auf dem Konus 114 sitzt ein Preßring 115 mit einer Auflaufschräge 116. In der Ausgangsstellung (Figur 36) wird der Preßring 115 durch einen Arretierstift 117 gehalten, der in einer passenden Ausnehmung in einer hülsenförmigen Halterung 118 geführt ist. Die Halterung 118 hat beidseits Randstege 119, 120, wobei der linksseitige Randsteg 119 in eine Ringnut 121 einfaßt, so daß die Halterung 118 axial festgelegt ist. Die Halterung 118 umgibt die Schraubenfeder 69 und die Preßhülse 70 einschließlich des Preßrings 115.

Der Preßring 70 und die Stützhülse 3 umgeben einen Ringraum 72, in den das Verbundrohr 31 nicht vollständig eingeschoben wird (durchgezogene oder gestrichelte Stellung). Nach dem Einschieben wird der Arretierstift 117 nach außen gezogen. Die Schraubenfeder 69, welche sich an dem linksseitigen Randsteg 119 und an dem Preßring 115 abstützt, schiebt nunmehr den Preßring 115 in Richtung auf den rechtsseitigen Randsteg 120 der Halterung 118. Die Federkraft ist so stark, daß dabei der Konus 114 der Preßhülse 70 in Richtung auf das Verbundrohr 31 gebogen wird, so daß ein nach innen gerichteter Konus 114 entsteht, der sich in das Verbundrohr 31 eingräbt, so daß eine Einschnürung 90 entsteht. Der Preßring 115 kommt dabei zur Anlage an dem rechtsseitigen Randsteg 120 der Halterung 118.

Aufgrund der Einschnürung 90 graben sich die beiden Dichtstege 5, 65 in die Kunststoffschicht 32 ein. Die Dichtflächen 7, 66 der Dichtstege 5, 65 sind zum freien Ende der Stützhülse 3 hin ausgerichtet. Die Schraubenfeder 69 ist bestrebt, die Preßhülse 70 über den Randsteg 75 in Richtung auf das Mittelstück 4 zu bewegen. Über den Formschluß des Konus' 114 mit dem Verbundrohr 31 wird diese Kraft auf das Verbundrohr 31 übertragen, so daß eine auf das Mittelstück 4 gerichtete Axialkraft entsteht. Diese belastet die Dichtflächen 7, 66 und sorgt für eine zuverlässige Abdichtung.

In den Figuren 38 und 39 ist eine Ausführungsform dargestellt, die sich insbesondere für eine Verbindung mit einem Metallrohr 2 eignet. Die Stützhülse 3 weist eine breite Ringnut 62 auf, in die ein im Querschnitt rechteckiger Federring 69 aus einem elastischen Kunststoffmaterial eingelegt ist. Anstatt von Dichtstegen ist hier ein O-Ring 122 vorgesehen, der auf einem Absatz 123 nahe dem freien Ende der Stützhülse 3 sitzt. Am Ende der Stützhülse 3 ist ein Ringsteg 125 ausgebildet, an dem der O-Ring 122 anliegt. Der Ringsteg 125 hat eine geringere Höhe als der O-Ring 122.

Zur Herstellung der Verbindung zwischen Rohrkupplung 1 und Rohr 2 werden Preßbacken 17 verwendet, die innenseitig mit einem Nasenprofil 126 versehen sind. Hierdurch wird das Rohr 2 beim Zusammenführen der Preßbacken 17 so verformt, wie in Figur 37 dargestellt, d. h. es entsteht eine wellenförmige Einschnürung 90, die bis zu der Stützhülse 3 geht. Dabei wird auch der Federring 69 in dem vom Rohr 2 übergriffenen Bereich komprimiert, wobei er sich gegen das Mittelstück 4 abstützt. Die hierdurch entstehenden Druckkräfte in Axialrichtung werden über die Einschnürung 90 auf das Rohr 2 übertragen und schieben es gegen den O-Ring 122. Um eine Überverpressung zu vermeiden, kann zwischen der Einschnürung 90 und dem O-Ring 122 ein Stopper angeordnet werden, der die Axialbeweglichkeit des Rohrs 2 in Richtung vom Mittelstück 4 weg begrenzt.

Auch hier ist wesentlich, daß der Federring 69 einen Ausdehnungsfreiraum 21 haben, der bei Erwärmung eine freie Ausdehnung ermöglicht.

## Patentansprüche

1. Verfahren zum Verbinden eines Rohres (2, 31) im Bereich seines Rohrendes mit einer Rohrkupplung (1), die wenigstens eine Stützhülse (3) mit einer Eingriffseinrichtung (5, 65, 67, 124) aufweist, wobei zunächst Rohr (2, 31) und Stützhülse (3) ineinandergeschoben und dann das Rohr (2, 31) unter Bildung einer Formschlußverbindung mit der Eingriffseinrichtung (5, 65, 67, 125) und unter Bildung einer Abdichtung mit in Axialrichtung aneinanderliegenden Dichtflächen (7, 66, 68, 122) verpreßt wird, **dadurch gekennzeichnet, daß** dem Rohr (2, 31) über eine sich an der Rohrkupplung (1) abstützende Federeinrichtung (20, 52) eine die Dichtflächen (7, 66, 68, 122) belastende Axialkraft aufgeprägt wird.

2. Verfahren nach Anspruch 1, **dadurch gekennzeichnet, daß** die Axialkraftaufprägung gleichzeitig mit oder nach der Verpressung des Rohrs (2, 31) durchgeführt wird.

3. Verfahren nach Anspruch 1 oder 2, **dadurch gekennzeichnet, daß** die Federeinrichtung dadurch gebildet wird, daß ein Rohrabschnitt zwischen Abdichtung (7) und einer zum Rohrende hin beabstandeten Stützeinrichtung (9, 40, 49) unter Aufprägung der Axialkraft eingespannt wird und daß dem Rohr (2, 31) auf der zum Rohrende gehenden Seite der Eingriffseinrichtung (5) eine radiale Ausdehnungsmöglichkeit gegeben wird.

4. Verfahren nach Anspruch 3, **dadurch gekennzeichnet, daß** das Rohr (2, 31) auch im Bereich der Stützeinrichtung (9, 40, 49) in Richtung auf die Stützhülse (3) unter Aufprägung der Axialkraft verpreßt wird.

5. Verfahren nach einem der Ansprüche 1 bis 4, **dadurch gekennzeichnet, daß** über das Rohr (2, 31) wenigstens im Bereich der Eingriffseinrichtung (5, 65, 67) ein Preßring (13, 14, 26, 70) geschoben und dieser unter plastischer Verformung mitverpreßt wird.

6. Verfahren nach Anspruch 1 oder 2, **dadurch gekennzeichnet, daß** als Federeinrichtung (52) ein zusätzliches Bauteil verwendet wird und daß die Federeinrichtung (52) nach dem Aufschieben des Rohrs (2, 31) auf die Stützhülse (3) in Wirkverbindung mit dem Rohr (2, 31) unter Aufprägung der Axialkraft gebracht wird.

7. Verfahren nach Anspruch 6, **dadurch gekennzeichnet, daß** die Federeinrichtung (52) zur Herstellung der wirkverbindung wenigstens teilweise verpreßt wird.

8. Verfahren nach Anspruch 7, **dadurch gekennzeichnet, daß** beim Verpressen eine formschlüssige Verbindung zwischen Federeinrichtung (52) und Mantelfläche des Rohrs (2, 31) erzeugt wird.

9. Verfahren nach einem der Ansprüche 1 bis 8, **dadurch gekennzeichnet, daß** eine Federeinrichtung (52) verwendet wird, die ein vorgespanntes Federelement (69) aufweist, und daß das Federelement (69) zum Zweck der Axialkraftaufprägung beim oder nach dem Verpressen des Rohrs (2, 31) freigegeben wird.

10. Verbindung zwischen einem Rohr (2, 31) im Bereich seines Rohrendes und einer Rohrkupplung (1), die wenigstens eine Stützhülse mit einer Eingriffseinrichtung (5, 65, 67, 124) aufweist, wobei das Rohr (2, 31) mit der Eingriffseinrichtung (5, 65, 67, 125) aufgrund plastischer Verformung eine formschlüssige Verbindung unter Ausbildung einer Abdichtung mit in Axialrichtung aneinanderliegenden Dichtflächen (7, 66, 68, 122) bildet, **dadurch gekennzeichnet, daß** wenigstens eine Federeinrichtung (20, 52) vorgesehen ist, welche sich an der Rohrkupplung (1) abstützt und eine die Dichtflächen (7, 66, 68, 122) belastende Axialkraft erzeugt.

11. Verbindung nach Anspruch 10, **dadurch gekennzeichnet,daß** die Federeinrichtung als Rohrabschnitt (20) ausgebildet ist, der zwischen der Eingriffseinrichtung (5) und einer zum Rohrende hin beabstandeten Stützeinrichtung (9, 40, 49) unter Aufprägung der Axialkraft eingespannt ist und für den ein radialer Ausdehnungsfreiraum (21) vorgesehen ist.

12. Verbindung nach Anspruch 11, **dadurch gekennzeichnet, daß** das Rohr (2, 31) auch im Bereich der Stützeinrichtung (9, 40, 49) zur Aufprägung der Axialkraft in Richtung auf die Stützhülse (3) verpreßt ist.

13. Verbindung nach einem der Ansprüche 10 bis 12, **dadurch gekennzeichnet, daß** das Rohr (2, 31) wenigstens im Bereich der Eingriffseinrichtung (5, 65, 67,) von einem Preßring (13, 14, 26, 70) umgeben und mitverpreßt ist.

14. Verbindung nach Anspruch 10, **dadurch gekennzeichnet, daß** die Federeinrichtung (52) ein zusätzliches Bauteil bildet, das in einer die Axialkraft aufprägenden Wirkverbindung mit dem Rohr (2, 31) steht.

15. Verbindung nach Anspruch 14, **dadurch gekennzeichnet, daß** die Federeinrichtung (52) wenigstens ein unter Spannung stehendes, elastisches Federelement (52, 58, 69) aufweist, das Wirkverbindung mit dem Rohr (2, 31) hat.

16. Verbindung nach Anspruche 14 oder 15, **dadurch gekennzeichnet, daß** das Federelement (69) über eine Preßhülse (70) verspannt ist.

17. Verbindung nach Anspruch 16, **dadurch gekennzeichnet, daß** die Preßhülse (70) sich über das Rohr (2) erstreckt und mit diesem verpreßt ist.

18. Verbindung nach einem der Ansprüche 10 bis 16, **dadurch gekennzeichnet, daß** die innenseitige Mantelfläche des Rohrs (2, 31) eine zum Rohrende hin gerichtete axiale Abstützfläche (90) aufweist, auf die die Federeinrichtung (52) einwirkt.

19. Verbindung nach Anspruch 18, **dadurch gekennzeichnet, daß** die Abstützfläche durch Einschnürung (90) des Rohres (2) gebildet ist.

20. Verbindung nach Anspruch 18 oder 19, **dadurch gekennzeichnet, daß** die Federeinrichtung in das Rohr (2) hineinreicht und mit diesem verpreßt ist.

21. Verbindung nach Anspruch 15, **dadurch gekennzeichnet, daß** die Federeinrichtung (52) als Federhülse (102) ausgebildet ist, die zwischen Abstützung an der Rohrkupplung (1) und Rohrende verpreßt und mit dem Rohr (2, 31) überlappt und auch dort mit dem Rohr (2, 31) verpreßt ist.

22. Verbindung nach einem der Ansprüche 10 bis 21, **dadurch gekennzeichnet, daß** in die Stützhülse (3) ein Dichtring eingelegt ist.

23. Rohrkupplung (1) für die Verbindung mit einem Rohr (2, 31), die wenigstens eine Stützhülse (3) mit zumindest einer Eingriffseinrichtung (5, 65, 67, 125) aufweist, wobei wenigstens eine Federeinrichtung (52) vorgesehen ist, **dadurch gekennzeichnet, daß** die Federeinrichtung (52) sich axial federnd an der Rohrkupplung (1) abstützt und derart in Wirkverbindung mit einem auf die Stützhülse (3) aufschiebbaren Rohr (2, 31) bringbar ist, daß eine Axialkraft auf das Rohr (2, 319 ausgeübt wird.

## Claims

1. Process for connecting a pipe (2, 31) in the region of its pipe end to a pipe coupling (1), comprising at least one support sleeve (3) with an engagement means (5, 65, 67, 124), wherein the pipe (2, 31) and the support sleeve (3) are first pushed into one another, the pipe (2, 31) then being pressure deformed, thereby bringing about a form-fitting connection with the engagement means (5, 65, 67, 125) and bringing about a sealing relationship with sealing surfaces (7, 66, 68, 122), mutually adjoining each other in axial direction, and wherein an axial force, bearing on the sealing surfaces (7, 66, 68, 122) is applied to the pipe (2, 31) by way of a spring means (20, 52), deriving support from the pipe coupling (1).

2. Process according to claim 1, wherein the axial force application is performed simultaneously or after pressure deformation of the pipe (2, 31).

3. Process according to claim 1 or 2, wherein the spring means is formed in that one pipe section between the sealing (7) and a support means (9, 40, 49), in spaced apart relationship to the pipe end, is clamped by applying the axial force and wherein a facility for radial expansion is provided for the pipe (2, 31) on the side of the engagement means (5) extending towards the pipe end.

4. Process according to claim 3, wherein the pipe (2, 31), by applying the axial force, is also pressure deformed in the region of the support means (9, 40, 49) in the direction towards the support sleeve (3).

5. Process according to any one of claims 1 to 4, wherein a wrap-around ring (13, 14, 26, 70) is pushed over the pipe (2, 31), at least in the region of the engagement means (5, 65, 67), which is likewise pressure deformed by plastic deformation.

6. Process according to claim 1 or 2, wherein an additional component is employed to serve as the spring means (52) and that the spring means (52), after sliding the pipe (2, 31) onto the support sleeve (3), is brought into co-active engagement with the pipe (2, 31) by applying the axial force.

7. Process according to claim 6, wherein the spring means (52) is pressure deformed, at least partly, in order to bring about the co-active engagement.

8. Process according to claim 7, wherein during the pressure deformation a form-fitting connection is brought about between the spring means (52) and the peripheral surface of the pipe (2, 31).

9. Process according to any one of claims 1 to 8, wherein a spring device (52) is employed, comprising a pretensioned spring element (69) and that the spring element (69), for the purpose of axial force application, is released during or after pressure deforming of the pipe (2, 31).

10. Connection between a pipe (2, 31) in the region of its pipe end and a pipe coupling (1), comprising at least one support sleeve with an engagement means (5, 65, 67, 124), the pipe (2, 31) entering into a form-fitting connection with the engagement means (5, 65, 67, 125), due to plastic deformation, bringing about a sealing of the sealing surfaces (7, 66, 68, 122), adjoining one another in axial direction, and wherein at least one spring means (20, 52) is provided, deriving support from the pipe coupling (1) and generating an axial force which bears on the sealing surfaces (7, 66, 68, 122).

11. Connection according to claim 10, wherein the spring device takes the form of a pipe section (20), clamped between the engagement means (5) and a support sleeve (9, 40, 49), provided in spaced apart relationship to the pipe end, by applying the axial force and for which a radial expansion clearance (21) is provided.

12. Connection according to claim 1, wherein the pipe (2, 31) is likewise pressure deformed in the region of the support means (9, 40, 49) for applying the axial force in the direction towards the support sleeve (3).

13. Connection according to any one of claims 10 to 12, wherein the pipe (2, 31) is surrounded by and pressure deformed jointly with a wrap-around ring (13, 14, 26, 70) at least in the region of the engagement means (5, 65, 67).

14. Connection according to claim 10, wherein the spring means (52) constitutes an additional component, which is in co-active engagement with the pipe (2, 31) for applying the axial force.

15. Connection according to claim 14, wherein the spring means (52) comprises at least one tensioned, resilient spring element (52, 58, 69), in co-active engagement with the pipe (2, 31).

16. Connection according to claim 14 or 15, wherein the spring element (69) is tensioned by way of a pressure sleeve (70).

17. Connection according to claim 16, wherein the pressure sleeve (70) extends over the pipe (2) and is pressure deformed together with the latter.

18. Connection according to any one of claims 10 to 16, wherein the inner periphery of the pipe (2, 31) comprises towards the pipe end an axial support surface (90) on which the spring means (52) acts.

19. Connection according to claim 18, wherein the support surface is constituted by a constriction (90) of the pipe (2).

20. Connection according to claim 18 or 19, wherein the spring means extends into the pipe (2) and is pressure deformed together with the latter.

21. Connection according to claim 15, wherein the spring means (52) takes the form of a spring sleeve (102), pressure deformed between the support at the pipe coupling (1) and the pipe end, overlapping the pipe (2, 31) and pressure deformed together with the pipe (2, 31) at that location as well.

22. Connection according to any one of claims 10 to 21, wherein a sealing ring is inserted in the support sleeve (3).

23. Pipe coupling (1) for the connection to a pipe (2, 31), comprising at least one support sleeve (3) with at least one engagement means (5, 65, 67, 125), and wherein at least one spring means (52) is provided, **characterized in that** the spring means (52) takes support from the pipe coupling (1) axially resilient and adapted to be brought into co-active engagement with a pipe (2, 31) adapted to be pushed onto the support sleeve (3), so that an axial force is applied to the pipe (2, 31).

## Revendications

1. Procédé pour la liaison d'un tuyau (2, 31) dans la zone d'extrémité de tuyau avec un raccord de tuyau (1) qui présente au moins un manchon d'appui (3) avec une installation d'enclenchement par contact (5, 65, 67, 124) et dans laquelle avant tout le tuyau (2, 31) et le manchon d'appui (3) sont glissés l'un dans l'autre et alors le tuyau (2, 31) est compressé suite à la formation d'une liaison en forme de fermeture avec l'installation d'enclenchement par contact (5, 65, 67, 125) et sous l'effet de la formation d'un joint d'étanchéité avec les surfaces d'étanchéités juxtaposées compressées dans la direction axiale (7, 66, 68, 122), **caractérisé en ce que** le tuyau (2, 31) s'appuyant sur installation de ressort (20, 52) à la liaison du tuyau (1) est sollicité par les surfaces d' étanchéité (7, 66, 68, 122) sera fixé par pression axiale.

2. Procédé selon la revendication 1, **caractérisé en ce que** la fixation par pression axiale est exécutée simultanément avec ou après la compression initiale du tuyau (2, 31).

3. Procédé selon la revendication 1 ou 2, **caractérisé en ce que** l'installation de ressort est formée avec une section de tuyau fixée entre le joint d'étanchéité (7) et mis à disposition à une installation d'appui à l'extrémité de tuyau (9, 40, 49) sous l'effet de fixation par pression dans la direction axiale et dans laquelle une possibilité d'extension radiale est donnée au tuyau (2, 31) sur le côté allant à l'extrémité du tuyau de l'installation d'enclenchement par contact (5).

4. Procédé selon la revendication 3, **caractérisé en ce que** le tuyau (2, 31) est aussi compressé dans la zone de l'installation d'appui (9, 40, 49) dans la direction du manchon d'appui (3) sous l'effet de fixation par pression axiale.

5. Procédé selon l'une des revendications 1 à 4, **caractérisé en ce que** sur le tuyau (2, 31) au moins dans la zone de l'installation d'enclenchement par contact (5, 65, 67) un anneau de compression (13, 14, 26, 70) est glissé et celui-ci est compressé avec une déformation plastique.

6. Procédé selon la revendication 1 ou 2, **caractérisé en ce que** comme l'installation de ressort (52) une pièce détachée complémentaire est utilisée et que l'installation de ressort (52) est amenée après avoir recouvert le tuyau (2, 31) sur le manchon (3) en liaison active avec le tuyau (2, 31) sous l'effet de fixation par pression axiale.

7. Procédé selon la revendication 6, **caractérisé en ce que** l'installation de ressort (52) au moins partiellement compressée pour la réalisation de la liaison active.

8. Procédé selon la revendication 7, **caractérisé en ce que** lors de la compression une liaison en forme de raccord de fermeture est produite entre l'installation de ressort (52) et la surface latérale du tuyau (2, 31).

9. Procédé selon l'une des revendications 1 à 8, **caractérisé en ce qu'**une installation de ressort (52) est utilisée qui présente un élément de ressort sous tension (69), et que l'élément de ressort (69) est libéré en vue de la fixation par pression axiale à ou après avoir compressé le tuyau (2, 31).

10. Liaison entre un tuyau (2, 31) lequel présente dans la zone d'extrémité de tuyau et d'un raccord de tuyau (1), au moins un manchon d'appui avec une installation d'enclenchement par contact (5, 65, 67, 124) et le tuyau (2, 31) avec l'installation d'enclenchement par contact (5, 65, 67, 125) forme une liaison en forme de raccord de fermeture en raison de la déformation plastique du joint d'étanchéité avec les surfaces d'étanchéités juxtaposées dans la direction axiale (7, 66, 68, 122 ), **caractérisé en ce qu'**au moins une installation de ressort (20, 52) est prévue, laquelle s'appuie au raccord de tuyau (1) et les surfaces d'étanchéités (7, 66, 68, 122) et sont produites par une force axiale.

11. Liaison selon la revendication 10, **caractérisé en ce que** l'installation de ressort est formée comme une section de tuyau (20) qui est fixée entre l'installation d'enclenchement par contact (5) et une installation d'appui mis à disposition à l'extrémité de tuyau (9, 40, 49) sous l'effet de fixation par pression axiale et pour laquelle une chambre de décompression libre pour une extension radiale (21) est prévue.

12. Liaison selon la revendication 11, **caractérisé en ce que** le tuyau (2, 31)est aussi compressé dans la zone de l'installation d'appui (9, 40, 49) à la fixation par pression axiale dans la direction du manchon d'appui (3).

13. Liaison selon l'une des revendications 10 à 12, **caractérisé en ce que** le tuyau (2, 31) est entouré au moins dans la zone de l'installation d'enclenchement par contact (5, 65, 67,) est entouré et est comprimé avec un anneau de compression (1 3, 14, 26, 70).

14. Liaison selon la revendication 10, **caractérisé en ce que** l'installation de ressort (52) forme une pièce détachée complémentaire qui se trouve de par la force axiale dans une liaison active avec le tuyau (2, 31).

15. Liaison selon la revendication 14, **caractérisé en ce que** l'installation de ressort (52) présente au moins un élément de ressort qui se trouve sous une tension élastique (52, 58, 69 ) qui a une liaison active avec le tuyau (2,31).

16. Liaison selon la revendication 14 ou 15, **caractérisé en ce que** l'élément de ressort (69) est recouvert par un manchon de compression (70).

17. Liaison selon la revendication 16, **caractérisé en ce que** le manchon de compression (70) est prolongé sur le tuyau (2) et est compressé avec celui-ci.

18. Liaison selon l'une des revendications 10 à 16, **caractérisé en ce que** la surface latérale intérieure aux cotés du tuyau (2, 31) présente à l'extrémité du tuyau une surface d'appui axiale (90), laquelle subie l'influence de l'installation de ressort (52).

19. Liaison selon la revendication 18, **caractérisé en ce que** la surface d'appui est formée par le serrage (90) du tuyau (2).

20. Liaison selon la revendication 18 ou 19, **caractérisé en ce que** l'installation de ressort est introduite et **en ce qu'**elle est *compressée* avec celui-ci dans le tuyau (2).

21. Liaison selon la revendication 15, **caractérisé en ce que** l'installation de ressort (52) est formée comme manchon élastique (102) qui entre l'appui au raccord de tuyau est compressé à l'extrémité du tuyau et pressé avec le tuyau (2, 31) et recouvre là aussi avec le tuyau (2, 31).

22. Liaison selon l'une des revendications 10 à 21, **caractérisé en ce que** une bague d'étanchéité est disposée dans le manchon d'appui (3).

23. Raccord de tuyau (1) pour la liaison avec un tuyau (2, 31), qui présente au moins un manchon d'appui (3) avec tout au moins une installation d'enclenchement par contact (5, 65, 67, 125), dans laquelle au moins une installation de ressort (52) est prévue, **caractérisé en ce que** l'installation de ressort (52) s'appuie de manière axiale et souple.au raccord de tuyau (1) et peut de cette manière être amenée ainsi en liaison active d'un manchon d'appui sur (3) des tuyaux pouvant être rapportés (2, 31) et **en ce qu'**une force axiale est exercée sur le tuyau (2, 31).
